(19) Europäisches Patentamt
European Patent Office
Office européen des brevets

(11) **EP 2 637 985 B1**

(12) **EUROPÄISCHE PATENTSCHRIFT**

(45) Veröffentlichungstag und Bekanntmachung des Hinweises auf die Patenterteilung:
**28.03.2018   Patentblatt 2018/13**

(21) Anmeldenummer: **11782088.6**

(22) Anmeldetag: **02.11.2011**

(51) Int Cl.:
*C04B 35/583* [(2006.01)]      *C04B 35/626* [(2006.01)]
*C04B 35/628* [(2006.01)]      *C04B 35/645* [(2006.01)]
*C01B 21/064* [(2006.01)]

(86) Internationale Anmeldenummer:
**PCT/EP2011/069215**

(87) Internationale Veröffentlichungsnummer:
**WO 2012/062627 (18.05.2012 Gazette 2012/20)**

(54) **BORNITRID-AGGLOMERATE, VERFAHREN ZU DEREN HERSTELLUNG UND DEREN VEWENDUNG**

BORON NITRIDE AGGLOMERATES, METHOD FOR PRODUCING SAME, AND USE THEREOF

AGGLOMÉRATS DE NITRURE DE BORE, LEUR PROCÉDÉ DE FABRICATION ET D'UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2010   DE 102010050900**

(43) Veröffentlichungstag der Anmeldung:
**18.09.2013   Patentblatt 2013/38**

(73) Patentinhaber: **3M Innovative Properties Company**
**St. Paul, MN 55133-3427 (US)**

(72) Erfinder:
• **ENGLER, Martin**
**87439 Kempten (DE)**
• **UIBEL, Krishna**
**87437 Waltenhofen (DE)**
• **EICHLER, Jens**
**87439 Kempten (DE)**

(74) Vertreter: **Ter Meer Steinmeister & Partner Patentanwälte mbB**
**Nymphenburger Straße 4**
**80335 München (DE)**

(56) Entgegenhaltungen:
**WO-A1-2010/137440      US-A- 5 898 009**
**US-A1- 2004 208 812      US-A1- 2007 259 211**

• **Morgan, C.S.; McCulloch, R.W.: "Ceramic processing of boron nitride insulators", 14. conference on ceramic science: processing of crystalline ceramics, Raleigh, NC, USA, 7 Nov 1977 Energy Citations Database (ECD), Nr. CONF-771137-2 1. Januar 1977 (1977-01-01), XP002667909, U.S. Department of Energy (DOE), USA Gefunden im Internet: URL:http://www.osti.gov/energycitations/pr oduct.biblio.jsp?osti_id=5271842 [gefunden am 2012-01-23]**
• **HSIAO YEN NG ET AL: "Thermal conductivity of boron nitride-filled thermoplastics: Effect of filler characteristics and composite processing conditions", POLYMER COMPOSITES, Bd. 26, Nr. 6, 1. Dezember 2005 (2005-12-01), Seiten 778-790, XP55017193, ISSN: 0272-8397, DOI: 10.1002/pc.20151**

EP 2 637 985 B1

**Beschreibung**

Gebiet der Erfindung

Die vorliegende Erfindung betrifft Bornitrid-Agglomerate, umfassend plättchenförmiges, hexagonales Bornitrid, ein Verfahren zu deren Herstellung sowie die Verwendung solcher Agglomerate als Füllstoff für Polymere und zum Heißpressen von Bornitrid-Sinterkörpern.

Hintergrund der Erfindung

Hexagonales Bornitrid-Pulver kann aufgrund seiner guten Wärmeleitfähigkeit als Füllstoff für Polymere verwendet werden bei Anwendungen, bei denen gleichzeitig eine gute elektrische Isolationsfähigkeit des eingesetzten Füllstoffs erforderlich ist. Weiterhin wird Bornitrid-Pulver auch als Sinterpulver zum Heißpressen eingesetzt für Anwendungen in der Metallurgie. Außerdem wird hexagonales Bornitrid-Pulver eingesetzt in kosmetischen Zubereitungen, als Schmierstoff, als Trennmittel in der Metallurgie sowie als Rohstoff zur Herstellung von kubischem Bornitrid.

Hexagonales Bornitrid-Pulver wird technisch durch Nitridierung von Borsäure in Anwesenheit einer Stickstoffquelle synthetisiert. Als Stickstoffquelle kann Ammoniak eingesetzt werden, wobei dann üblicherweise Calciumphosphat als Trägermaterial für die Borsäure eingesetzt wird. Auch eine organische Stickstoffquelle wie Melamin oder Harnstoff kann unter Stickstoff mit Borsäure oder Boraten umgesetzt werden. Die Nitridierung wird üblicherweise bei Temperaturen von 800 bis 1200°C durchgeführt. Das dabei erhaltene Bornitrid ist weitgehend amorph, es wird auch als turbostratisches Bornitrid bezeichnet. Aus dem amorphen Bornitrid wird bei höheren Temperaturen bis etwa 2100°C vorzugsweise in einer Stickstoffatmosphäre hexagonales, kristallines Bornitrid hergestellt. Oftmals werden für diese Hochtemperaturbehandlung zum amorphen Bornitrid noch Kristallisationszusätze zugefügt.

Bei der Hochtemperaturbehandlung entsteht das hexagonale Bornitrid (hBN) in Form von Primärpartikeln einer plättchenförmigen Morphologie. Typische Plättchengrößen liegen im Bereich von ca. 1 bis 20 $\mu$m, aber auch Plättchengrößen bis zu 50 $\mu$m und mehr sind möglich. Üblicherweise wird das Glühgut nach der Herstellung aufgemahlen bzw. entagglomeriert, um verarbeitungsfähige Pulver zu erhalten.

Die Wärmeleitfähigkeit des hexagonalen Bornitrids ist in der Plättchenebene (a-Achse) größer als senkrecht dazu (c-Achse). In Richtung der c-Achse beträgt die Wärmeleitfähigkeit 2,0 W/mK, in Richtung der a-Achse hingegen 400 W/mK (siehe R. F. Hill, SMTA National Symposium "Emerging packaging Technologies", Research Triangle Park, N.C., Nov. 18-21, 1996).

Neben plättchenförmigen Bornitrid-Primärpartikeln bzw. Agglomeraten solcher Primärpartikel, die bei der Synthese von hexagonalem Bornitrid anfallen, wird hexagonales Bornitrid-Pulver für Füllstoff-Anwendungen auch oft in Form von gezielt hergestellten Granulaten eingesetzt, d.h. in Form von aus den Primärpartikeln aufgebauten Sekundärpartikeln. Durch die Granulation werden die Verarbeitungseigenschaften, wie etwa die Rieselfähigkeit und die Dosierbarkeit, des Bornitrid-Pulvers verbessert und es können höhere Füllgrade und höhere Wärmeleitfähigkeiten beispielsweise in Polymer-Bornitrid-Verbundwerkstoffen erzielt werden. Dabei gibt es verschiedene Verfahren zur Herstellung solcher Sekundärpartikel, die zu Granulaten mit unterschiedlicher Morphologie und unterschiedlichen Eigenschaften führen.

Für die gezielt hergestellten Granulate wird oft auch die Bezeichnung "Agglomerate" verwendet, ebenso wie für die herstellungsbedingt bei der Synthese des hexagonalen Bornitrids anfallenden Agglomerate bzw. Aggregate.

Stand der Technik

Bekannte Methoden zur Herstellung von Granulaten sind die Aufbaugranulation und die Sprühgranulation. Bei der Sprühgranulation wird von einer Suspension von Feststoff in einer Flüssigkeit ausgegangen, welche zu Tröpfchen zerstäubt wird und diese dann anschließend getrocknet werden. Bei der Aufbaugranulation wird zum Feststoff eine geringe Menge Flüssigkeit gegeben, welche aufgrund von Oberflächenbenetzung und Kapillarkräften die Feststoffprimärpartikel agglomeriert, diese Agglomerate werden anschließend getrocknet. Üblicherweise werden bei beiden Methoden Bindemittel eingesetzt. Bei beiden Verfahren werden Sekundärpartikel geringer Dichte bzw. hoher Porosität erhalten.

In der US 2006/0 127 422 A1 wird ein Verfahren zur Herstellung sphärischer Bornitrid-Agglomerate beschrieben, bei dem plättchenförmiges hexagonales Bornitrid aus einer wässrigen Suspension mit einem organischen Binder sprühgetrocknet wird. Die Sprühtrocknung führt zu sphärischen Bornitrid-Granulaten mit einer durchschnittlichen Agglomeratgröße von 1 bis 500 $\mu$m. Das Sprühgranulat ist im Gegensatz zum Ausgangspulver fließfähig.

In der WO 03/013 845 A1 ist ein Verfahren zur Herstellung von sphärischen Bornitrid-Granulaten beschrieben, bei dem Primärpartikel von hexagonalem Bornitrid mit Zusatz von Polycarbonsäuren, Silanen oder organometallischen Verbindungen sprühgetrocknet und die erhaltenen Sprühgranulate dann bei Temperaturen zwischen 1800 und 2400°C gesintert werden.

Nachteilig bei den Verfahren zur Granulation von Bornitrid über Sprühtrocknen ist, dass der Einsatz von Bindemitteln erforderlich ist und die für die Sprühtrocknung eingesetzten organische Binder bei der Weiterverarbeitung als Füllstoff für Polymere an das jeweilige System angepasst werden müssen. Die bei der Sprühtrocknung erhaltenen Granulate haben eine geringe Dichte, bei der Verwendung als Füllstoff für Thermoplaste kann es zur vollständigen Desintegration der Agglomerate kommen.

Eine Möglichkeit zur Herstellung von Bornitrid-Granulaten hoher Dichte besteht in der Zerkleinerung von heißgepresstem Bornitrid. Dabei werden Granulate mit hoher Dichte, entsprechend der Dichte der heißgepressten Formkörper, erhalten. Nachteilig bei diesem Verfahren ist jedoch, dass zunächst heißgepresste Bornitrid-Körper bei Temperaturen von etwa 1800°C und einem axialen Pressdruck von typischerweise 20 MPa aus Bornitrid-Pulver (d.h. aus Bornitrid-Primärpartikeln) hergestellt werden müssen, was ein aufwändiges und teures Verfahren ist. Auch der anschließende Verfahrensschritt der gezielten Zerkleinerung der heißgepressten Körper ist aufwändig.

Eine weitere Methode zur Herstellung von Bornitrid-Granulaten für Füllstoff-Anwendungen ist in US 6,048,511 und EP 0 939 066 A1 beschrieben. Dabei wird hexagonales Bornitrid-Pulver zu Partikeln verarbeitet, deren Größenverteilung sich über einen minimalen Größenbereich von 100 $\mu$m erstreckt, das gemahlene hBN-Pulver wird kalt verpresst, anschließend werden aus dem kalt gepressten Formkörper durch Aufbrechen Granulate hergestellt, und schließlich werden die so entstandenen Granulate gesiebt, um Agglomerate eines gewünschten Größenbereichs zu erhalten. Durch mehrfache Wiederholung der Schritte Aufbrechen und Kaltpressen können Formkörper gepresst werden mit einer Dichte von bis zu 1,91 g/cm$^3$, aus denen durch Aufbrechen Granulate hergestellt werden. Nachteilig an diesem Verfahren ist, dass es sehr aufwändig ist, da zunächst eine spezielle Größenverteilung des Ausgangspulvers eingestellt werden und danach in mehreren Schritten kompaktiert und zerkleinert werden muß.

In der US 2002/0 006 373 A1 werden Briketts aus agglomerierten Bornitrid-Plättchen, die bei der Herstellung des hexagonalen Bornitrids bei der Hochtemperaturbehandlung unter Stickstoff bei 1400 bis 2300°C entstehen, aufgemahlen, wodurch ein Pulver entsteht, das Agglomerate von hexagonalem Bornitrid enthält sowie nicht agglomerierte Bornitrid-Platelets, und anschließend werden die nicht agglomerierten Platelets entfernt, so dass ein Pulver entsteht, das aus Agglomeraten von hexagonalen Bornitrid-Platelets mit einer Agglomeratgrößenverteilung von 10 bis 125 $\mu$m entsteht.

In der US 2004/0 208 812 A1 wird ein Verfahren zur Herstellung eines Bornitrid-Agglomerate enthaltenden Bornitrid-Pulvers beschrieben, bei dem hexagonales Bornitrid mit einer durchschnittlichen Platelet-Größe von mindestens 2 $\mu$m zu Grünkörpern verpresst wird, die Grünkörper dann gesintert bei Temperaturen oberhalb 1400°C bis auf Dichten von 1,4 bis 1,7 g/cm$^3$ und die erhaltenen Sinterkörper anschließend aufgemahlen werden.

In der WO 2005/021 428 A1 wird ein Verfahren zur Herstellung von Bornitrid-Agglomeraten niedriger und mittlerer Dichte beschrieben, bei dem turbostratisches oder hexagonales Bornitrid-Pulver einer Partikelgröße von höchstens 5 $\mu$m einer Temperaturbehandlung oberhalb 1400°C, vorzugsweise 1850 bis 1900°C, unterzogen und anschließend gemahlen wird. Vor der Temperaturbehandlung kann das Bornitrid-Pulver isostatisch zu Formkörpern verpresst und gemahlen werden.

Die entstandenen Agglomerate sind kugel- bis kubusförmig und die Agglomerate haben isotrope Eigenschaften, d. h. die Primärpartikel sind nicht orientiert in den Agglomeraten.

In der US 5,854,155 und US 6,096,671 wird ein Verfahren zur Herstellung von aggregierten plättchenförmigen Bornitrid-Partikeln beschrieben, bei dem die Bornitrid-Plättchen in den Aggregaten nicht orientiert sind, d. h. keine Vorzugsrichtung haben, und ohne Binder miteinander verbunden sind. Die Bornitrid-Aggregate sind kiefernzapfenförmig, sie werden bereits bei der Synthese des hexagonalen Bornitrids aus Borsäure, Melamin und Kristallisationskatalysator gebildet. Die Dichte dieser Aggregate ist sehr niedrig und die Aggregate verfügen nur über eine geringe mechanische Stabilität.

Den bisher beschriebenen Verfahren zur Herstellung von Bornitrid-Granulaten ist gemeinsam, dass sie alle aus nicht orientieren plättchenförmigen Bornitrid-Partikeln bestehen. Für die Anwendung als Füllstoff zur Erhöhung der Wärmeleitfähigkeit von Polymeren ist die Plättchenform des hexagonalen Bornitrids nachteilig (wie beispielsweise in der WO 03/013845 A1 auf Seite 2 oben beschrieben). Die geringe Primärpartikelgröße und die damit häufig einhergehende hohe spezifische Oberfläche des hexagonalen Bornitrid-Pulvers schränkt die Verarbeitungs- und Anwendungsmöglichkeiten ein. Durch die Herstellung von isotropen Agglomeraten mit nicht orientierten hBN-Plättchen können die Verarbeitungseigenschaften verbessert werden.

Bei der Anwendung von Bornitrid-Pulver als Füllstoff für Polymere ist man bestrebt, eine möglichst hohe Wärmeleitfähigkeit für die Polymer-Bornitrid-Verbundwerkstoffe zu erreichen, um entstandene Wärme möglichst gut abführen zu können. Für einen bestimmten zu erreichenden Wert für die Wärmeleitfähigkeit des Polymer-Bornitrid-Verbundwerkstoffs soll der Füllgrad, also die einzusetzende Menge an Bornitrid, möglichst gering sein.

Sind nun die Bornitrid-Primärpartikel im Polymer-Bornitrid-Verbundwerkstoff isotrop orientiert, d.h. weisen sie keine Vorzugsorientierung auf, so kann die gute Wärmeleitfähigkeit von Bornitrid in der Plättchenebene ("in-plane") nicht voll ausgenutzt werden, da die Wärmeleitung in einem solchen Werkstoff zwar oft in der Plättchenebene, aber oft auch senkrecht zur Plättchenebene des hexagonalen Bornitrids erfolgt. Werden nun isotrope Bornitrid-Agglomerate zur Herstellung solcher Verbundwerkstoffe eingesetzt, bei denen die Primärpartikel in den Agglomeraten nicht orientiert sind, so liegt in den Polymer-Bornitrid-Verbundwerkstoffen ebenfalls eine isotrope Verteilung der Bornitrid-Primärpartikel vor und die gute Wärmeleitfähigkeit von Bornitrid in der Plättchenebene kann ebenfalls nicht optimal ausgenutzt werden.

Neben der Herstellung von Granulaten sind noch andere Wege beschrieben worden, die Wärmeleitfähigkeit von mit Bornitrid gefüllten Polymeren zu erhöhen.

In der US 2003/0 153 665 A1 wird beispielsweise ein Verfahren beschrieben, bei dem an eine hexagonales Bornitrid-Pulver enthaltende Polymermischung ein magnetisches Feld angelegt wird, durch die die Bornitrid-Plättchen des hexagonalen Bornitrid-Pulvers in einer bestimmten Richtung orientiert werden, anschließend wird die Polymermischung mit dem orientierten Bornitrid-Pulver ausgehärtet. Auf diese Weise können gefüllte Polymere mit einer erhöhten Wärmeleitfähigkeit in der Orientierungsrichtung der Bornitrid-Plättchen erhalten werden. Nachteilig ist hierbei jedoch, dass ein äußeres Magnetfeld zur Ausrichtung der Bornitrid-Plättchen benötigt wird.

In der WO 2008/085 999 A1 wird ein mit Bornitrid gefülltes Polymermaterial hergestellt, in dem hexagonales Bornitrid mit einem Polymer vermischt und unter Krafteinleitung, beispielsweise durch Extrudieren, so ausgehärtet wird, dass sich die Bornitrid-Plättchen ausrichten. Im Beispiel werden mehrere der so erhaltenen Proben von 1 mm Dicke aufeinandergestapelt und bei 130°C warm verpresst. Aus dem erhaltenen Formkörper werden senkrecht zur Orientierungsrichtung der Bornitrid-Plättchen Scheiben bearbeitet. Die an den so hergestellten Scheiben gemessene through-plane-Wärmeleitfähigkeit ist höher als die des ursprünglich hergestellten Formkörpers. Hierbei müssen jedoch die Proben stets senkrecht zur Orientierungsrichtung der Bornitrid-Plättchen herausgetrennt werden, so dass das Verfahren aufwändig und nicht für alle Anwendungen einsetzbar ist. Beispielsweise ist das Verfahren nur für Thermoplaste, nicht jedoch für Duroplaste oder Pasten geeignet.

In Morgan, C.S.; McCulloch, R.W.: "Ceramic processing of boron nitride insulators", 14. Conference on ceramic science: processing of crystalline ceramics, Raleigh, NC, USA, 7 Nov 1977, Energy Citations Database (ECD), Nr. CONF-771137-2 1. Januar 1977 (1977-01-01), U.S. Department of Energy (DOE), USA, wird die Herstellung von Bornitrid-Formkörpern beschrieben. Hierbei wird ein Vorpressverfahren angewandt, bei dem eine BN-Pulverprobe kalt verpresst wird. Die vorgepressten Formkörper werden granuliert und anschließend gesiebt. Das so hergestellte Granulat wird dann in die endgültige Form gepresst.

In HSIA YEN NG ET AL: "Thermal conductivity of boron nitride-filled thermplastics: Effect of filler characteristics and composite processing conditions", POLYMER COM-POSITES, Bd. 26, Nr. 6, 1. Dezember 2005 (2005-12-01), Seiten 778-790, Tabelle 1, werden unter der Bezeichnung "PT 180" BN-Agglomerate beschrieben, welche plättchenförmige, hexagonale BN-Primärpartikel umfassen. Hierbei handelt es sich um unregelmäßig geformte Agglomerate mit einer rauen Oberfläche.

In US 5,898,009 A wird eine Folie beschrieben, in der BN-Primärpartikel ausgerichtet sind. Hierbei werden BN-Primärpartikel mit Epoxid beschichtet. Die Pulver werden dann leicht zu Granulaten mit einer flachen Form agglomeriert. Diese als "Granulate" bezeichneten Partikel haben eine Größe von etwa 40-60 $\mu$m, während die Größe der eingesetzten Primärpartikel 45 $\mu$m beträgt. Das Epoxid dient als Bindemittel zur Herstellung der Folien.

Die WO 2010/137440 A1 (bzw. die korrespondierende EP 2 436 662 A1) offenbart einen BN-Sinterkörper, umfassend hexagonales Bornitrid, wobei das hexagonale Bornitrid nur einen geringen Texturindex aufweist. <u>Aufgabe der Erfindung</u>

Der Erfindung liegt daher die Aufgabe zugrunde, unter Überwindung der Nachteile des Standes der Technik Bornitrid-Agglomerate hoher Dichte zur Verfügung zu stellen, mit denen die anisotropen Eigenschaften des hexagonalen Bornitrids besser ausgenutzt werden können, insbesondere für Anwendungen als Füllstoff für Polymere.

Weiterhin liegt der Erfindung die Aufgabe zugrunde, ein kostengünstiges, einfaches Verfahren zur Herstellung von Bornitrid-Agglomeraten hoher Dichte zur Verfügung zu stellen.

<u>Zusammenfassung der Erfindung</u>

Die vorstehende Aufgabe wird erfindungsgemäß gelöst durch Bornitrid-Agglomerate gemäß Anspruch 1, ein Verfahren zur Herstellung solcher Bornitrid-Agglomerate gemäß Anspruch 9 sowie einen Polymer-Bornitrid-Verbundwerkstoff gemäß Anspruch 14 und einen Bornitrid-Sinterkörper gemäß Anspruch 15.

Gegenstand der Erfindung sind somit Bornitrid-Agglomerate wie in Anspruch 1 definiert, umfassend plättchenförmige, hexagonale Bornitrid-Primärpartikel, die miteinander mit einer Vorzugsorientierung agglomeriert sind, wobei die Agglomerate schuppenförmig ausgebildet sind.

Gegenstand der Erfindung ist ebenso gemäß Anspruch 9 ein Verfahren zur Herstellung solcher Bornitrid-Agglomerate, bei dem plättchenförmige, hexagonale Bornitrid-Primärpartikel in der Weise agglomeriert werden, dass sie sich zueinander mit einer Vorzugsorientierung ausrichten.

Gegenstand der Erfindung ist weiterhin ein Polymer-Bornitrid-Verbundwerkstoff gemäß Anspruch 14, umfassend erfindungsgemäße, schuppenförmige Bornitrid-Agglomerate sowie ein Bornitrid-Sinterkörper gemäß Anspruch 15, erhältlich durch Sintern von erfindungsgemäßen, schuppenförmigen Bornitrid-Agglomeraten.

Im Unterschied zu den bekannten Agglomeraten, bei denen die Bornitrid-Primärpartikel in den Agglomeraten weitgehend ohne Vorzugsorientierung zueinander agglomeriert sind, haben die Primärpartikel in den erfindungsgemäßen Agglomeraten eine deutliche Vorzugsorientierung, sie sind orientiert zueinander agglomeriert. Die erfindungsgemäßen Bornitrid-Agglomerate können aufgrund der Vorzugsrichtung der Bornitrid-Primärpartikel auch als texturierte Bornitrid-Agglomerate bezeichnet werden.

Die erfindungsgemäßen Bornitrid-Agglomerate sind schuppenförmig und können aufgrund ihrer Schuppenform auch als "Flakes" bezeichnet werden, wobei die erfindungsgemäßen Flakes zu unterscheiden sind von nicht agglomerierten plättchenförmigen Bornitrid-Primärpartikeln, die in der englischsprachigen Literatur oftmals auch als "flaky boron nitride particles" bezeichnet werden. Die erfindungsgemäßen Agglomerate sind in ihrer Struktur aus vielen einzelnen Bornitrid-Plättchen aufgebaut.

Die erfindungsgemäßen Agglomerate sind im Unterschied zu nicht agglomerierten Bornitrid-Pulvern rieselfähig und gut dosierbar.

Die erfindungsgemäßen texturieren Agglomerate haben eine hohe Dichte, die sogar noch höher als die der hochdichten Agglomerate der EP 0 939 066 A1 liegen kann.

Die erfindungsgemäßen Agglomerate verfügen außerdem über eine gute mechanische Stabilität, wobei die mechanische Stabilität durch eine Temperaturbehandlung der Agglomerate noch deutlich verbessert werden kann.

Aufgrund der Vorzugsorientierung der Bornitrid-Primärpartikel in den Agglomeraten haben die erfindungsgemäßen Agglomerate im Unterschied zu den bekannten Agglomeraten anisotrope Eigenschaften. Insbesondere ist die Wärmeleitfähigkeit in Richtung des Durchmessers der Flakes höher als in Richtung der Dicke der Flakes, da in Richtung des Durchmessers der Flakes, also in der Ebene der schuppenförmigen Agglomerate, die Wärmeleitung weitgehend in der Plättchenebene der Bornitrid-Primärpartikel erfolgt, in der die Wärmeleitfähigkeit höher ist.

Überraschenderweise hat sich gezeigt, dass mit dem erfindungsgemäßen Verfahren Agglomerate hoher Dichte und guter mechanischer Stabilität hergestellt werden können.

Überraschend ist weiterhin, dass Bornitrid-Agglomerate mit hoher Texturierung hergestellt werden können, in denen die Bornitrid-Primärpartikel sehr stark zueinander orientiert sind, im Unterschied zu den bekannten isotropen Granulaten, in denen praktisch keine oder allenfalls nur eine sehr geringe Texturierung vorliegt. Die Texturierung ist auch deutlich stärker als in heißgepresstem Bornitrid.

Gegenüber den im Stand der Technik bekannten Verfahren zur Herstellung von Bornitrid-Granulaten hat das erfindungsgemäße Verfahren den Vorteil, dass es weniger aufwändig ist, dass bereits in einem Schritt Granulate hoher Dichte hergestellt werden können und dass es als kontinuierliches Verfahren zur Herstellung von großen Mengen an Bornitrid-Agglomeraten geeignet ist.

Überraschenderweise hat sich auch gezeigt, dass die erfindungsgemäßen, texturierten Bornitrid-Agglomerate als Füllstoff für Polymere eingesetzt werden können und dabei hohe Wärmeleitfähigkeitswerte erhalten werden. Dies ist überraschend, da bislang die plättchenförmige Partikelmorphologie der Primärpartikel in Verbindung mit der Anisotropie der Wärmeleitfähigkeit der Primärpartikel als ungünstig für Füllstoff-Anwendungen galt, und dieser Nachteil nur durch die Herstellung und Verwendung isotroper Granulate überwunden werden konnte.

Durch die anisotropen Eigenschaften der erfindungsgemäßen Agglomerate können die anisotropen Wärmeleitfähigkeitseigenschaften des hexagonalen Bornitrids besser ausgenutzt werden. Mit isotropen, eine Kugel- oder Würfelform aufweisenden Bornitrid-Agglomeraten gefüllte Polymere weisen ebenfalls isotrope Wärmeleitfähgkeitseigenschaften auf. Bei der Verwendung der erfindungsgemäßen texturierten Bornitrid-Agglomerate mit anisotropen Eigenschaften kann die Anisotropie der Wärmeleitfähigkeit des Polymer-BN-Verbundwerkstoffs eingestellt werden. Werden die texturierten Agglomerate mit einer Plättchenform eingesetzt, so werden beispielsweise beim Spritzgießen entsprechender Polymer-Bornitrid-Compounds, etwa von Platten oder Rippen, infolge von Wandreibung zwangsläufig Polymer-Bornitrid-Verbundwerkstoffe mit einer Vorzugsorientierung der texturierten Bornitrid-Agglomerate erhalten. So hergestellte Polymer-Bornitrid-Verbundwerkstoffe weisen bei Ausrichtung der Agglomerate in Vorzugsrichtung höhere Wärmeleitfähigkeitswerte in der Vorzugsrichtung ("in-plane" bezogen auf die Plättchenebene) als senkrecht zur Vorzugsrichtung ("through-plane") auf. Überraschenderweise können bei solchen Polymer-Bornitrid-Verbundwerkstoffen aber nicht nur hohe Wärmeleitfähigkeitswerte in-plane, sondern auch hohe Wärmeleitfähigkeitswerte through-plane erhalten werden.

Im Gegensatz zu einigen im Stand der Technik bekannten Verfahren zur Herstellung von Bornitrid-Granulaten bzw. -Agglomeraten, können mit dem erfindungsgemäßen Verfahren binderfreie Agglomerate hergestellt werden.

Kurze Beschreibung der beigefügten Zeichnungen

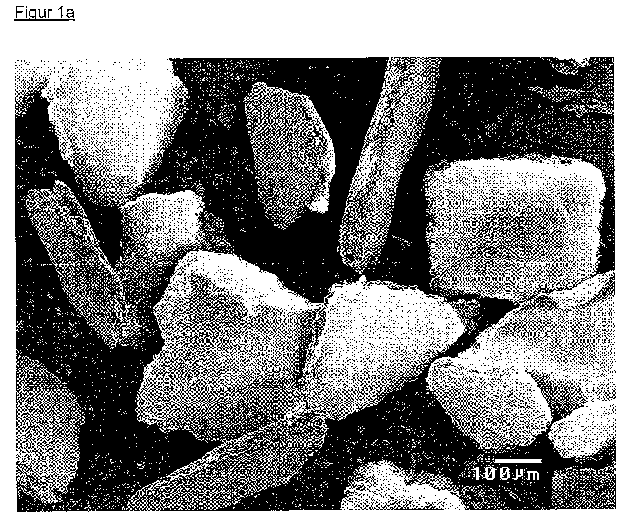

Figur 1a zeigt eine REM-Aufnahme der erfindungsgemäßen Agglomerate mit glatten Formgebungsflächen und rauen Bruchflächen.

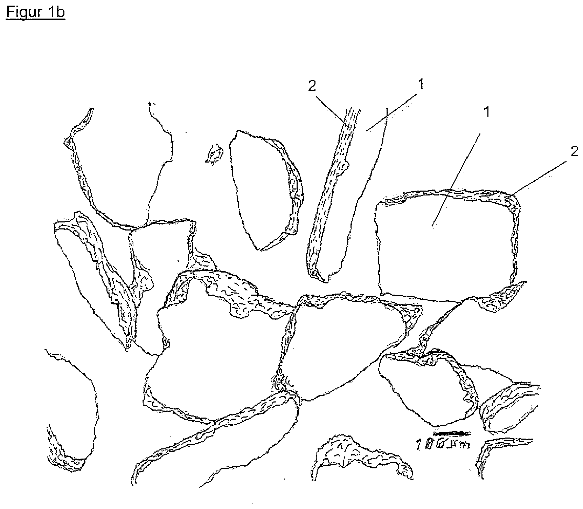

Figur 1b zeigt eine Schemazeichnung der REM-Aufnahme von Figur 1a, mit glatten Formgebungsflächen 1 und rauen Bruchflächen 2.

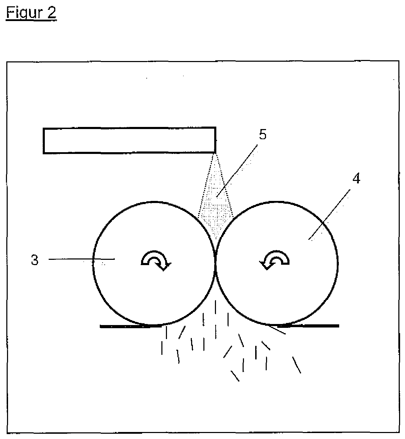

Figur 2 zeigt schematisch die Herstellung von erfindungsgemäßen Agglomeraten durch Kompaktierung zwischen zwei spaltlos angeordneten, gegenläufigen Walzen 3, 4, wobei eine der Walzen angetrieben wird.

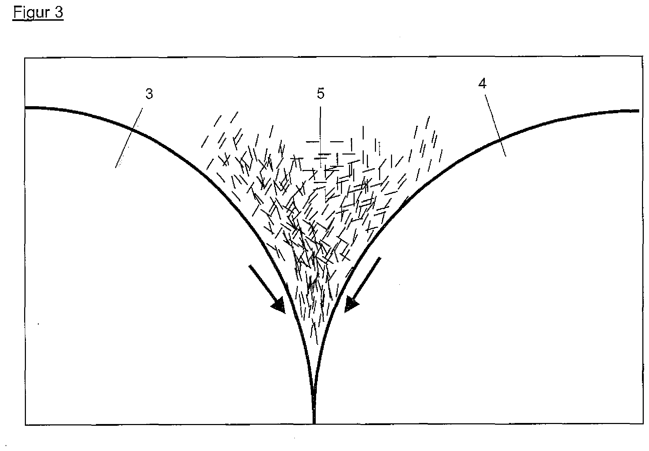

Figur 3 zeigt schematisch die Pulverschüttung 5 oberhalb der beiden Walzen 3, 4. Die zu agglomerierenden Partikel orientieren sich in einem engen Bereich oberhalb des "Walzspalts".

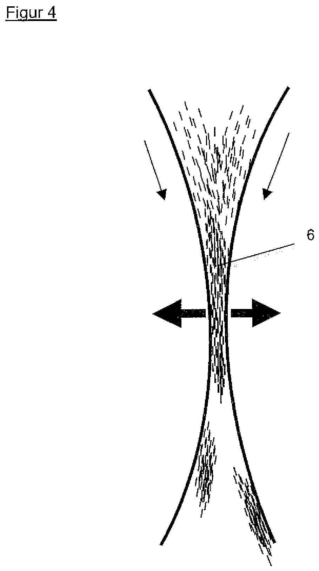

Figur 4 zeigt schematisch den gefüllten Walzenspalt 6. Im Spalt 6 orientieren sich die vororientierten Partikel vollständig und werden unter dem hohen Druck im Walzenspalt zu texturierten Agglomeraten hoher Dichte kompaktiert. Bei einer Agglomeratdicke von beispielsweise 50 μm haben die texturierten Agglomerate die beiden Walzen um 50 μm auseinandergedrückt.

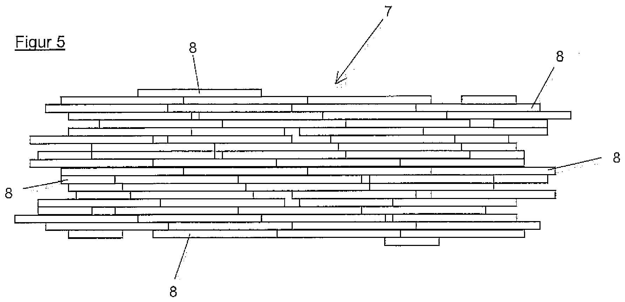

Figur 5 zeigt anhand eines schematischen Querschnitts die Struktur der erfindungsgemäßen texturierten Agglomerate 7. Primärpartikel 8 von hexagonalem Bornitrid sind dicht gepackt und in gleicher Weise, weitgehend parallel zueinander orientiert, d.h. sie haben eine Vorzugsorientierung zueinander. Die Rauheit der Formgebungsoberfläche (oben und unten in der Schemazeichnung) liegt im Bereich der Dicke der Primärpartikel (< 1 μm). Die Rauheit der Oberflächen der seitlichen Bereiche, d.h. der Bruchflächen oder beim Kompaktieren entstandene Randbereiche, liegt im Bereich der mittleren Primärpartikeldurchmesser.

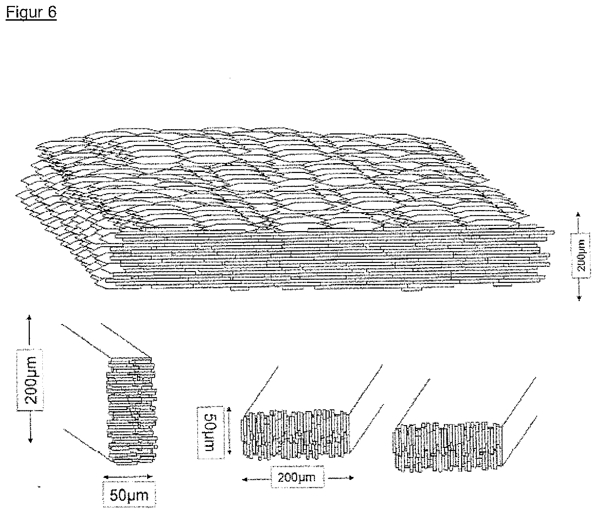

Figur 6 zeigt anhand einer schematischen Darstellung, wie durch geeignete Zerkleinerung, z.B. Schneiden oder Brechen, von texturierten Bornitrid-Agglomeraten senkrecht zur Formgebungsoberfläche erneut texturierte Agglomerate erzeugt werden können, wobei die Orientierung der Bornitrid-Primärpartikel in den so erzeugten texturierten Agglomeraten umgekehrt bzw. gedreht wurde: die Orientierung der Primärpartikel ist in den neu erzeugten Agglomeraten nicht mehr parallel, sondern senkrecht zur Grundfläche der Agglomerate. Die so hergestellten texturierten Agglomerate können in Polymer-Bornitrid-Verbundwerkstoffen beim Formgebungsprozess orientiert werden, wodurch eine erhöhte through-plane-Wärmeleitfähigkeit erhalten werden kann.

Detaillierte Beschreibung der Erfindung

Wie bereits oben erwähnt, handelt es sich bei den erfindungsgemäßen Bornitrid-Agglomeraten um Agglomerate von plättchenförmigen, hexagonalen Bornitrid-Primärpartikeln, die miteinander mit einer Vorzugsorientierung agglomeriert sind und somit auch als orientierte bzw. texturierte Agglomerate bzw. Granulate bezeichnet werden können.

Die Bornitrid-Primärpartikel sind in der Weise mit einer Vorzugsorientierung agglomeriert, dass die Plättchenebenen der Bornitrid-Primärpartikel im wesentlichen parallel zueinander ausgerichtet sind, das heißt, dass die Mehrzahl der Bornitrid-Primärpartikel eine parallele oder eine nahezu parallele Ausrichtung zueinander aufweist.

Der Grad der Ausrichtung der plättchenförmigen Bornitrid-Primärpartikel in den erfindungsgemäßen Agglomeraten kann durch den Texturindex charakterisiert werden. Der Texturindex von hexagonalem Bornitrid mit isotroper Ausrichtung der plättchenförmigen Bornitrid-Primärpartikel, also ohne Vorzugsorientierung, liegt bei 1. Mit dem Grad der Orientierung in der Probe steigt der Texturindex an. Der Texturindex der erfindungsgemäßen Agglomerate liegt bei Werten von größer 1,5, vorzugsweise bei 2,0 und mehr, weiter vorzugsweise bei 2,8 und mehr, besonders bevorzugt bei 3,5 und mehr. Der Texturindex der erfindungsgemäßen Agglomerate kann auch Werte von 5,0 und mehr sowie von 10,0 und mehr aufweisen.

Die Bestimmung des Texturindex erfolgt röntgenographisch. Dazu wird das Verhältnis der an Röntgenbeugungsdiagrammen gemessenen Intensitäten des (002)- und des (100)-Reflexes bestimmt und durch den entsprechenden Verhältniswert für eine ideale, nicht texturierte hBN-Probe geteilt. Dieses ideale Verhältnis kann aus den JCPDS-Daten ermittelt werden und beträgt 7,29.

Der Texturindex (TI) kann somit gemäß der Formel

$$TI \; = \; \frac{I_{(002),\,Probe} / I_{(100),\,Probe}}{I_{(002),\,theoretisch} / I_{(100),\,theoretisch}} \; = \; \frac{I_{(002),\,Probe} / I_{(100),\,Probe}}{7,29}$$

ermittelt werden.

An den erfindungsgemäßen Agglomeraten einer Größe von etwa 3,5 cm$^2$ (bezogen auf die Fläche der Ober- bzw. Unterseite der schuppenförmigen Agglomerate) können für den Texturindex sehr hohe Werte von 100 und mehr erhalten werden. Diese an den großen schuppenförmigen Agglomeraten gemessenen Werte sind ein Beleg für die sehr starke Ausrichtung der Primärpartikel in den erfindungsgemäßen Agglomeraten. Die Messung des Texturindex an kleineren Agglomeraten von etwa kleiner 1 mm erfolgt an Agglomeratschüttungen. Dabei erfolgt teilweise eine statistische Ausrichtung im Probenträger für die röntgenographische Messung. Daher sind die an kleineren texturierten Agglomeraten erhaltenen Werte für den Texturindex immer niedriger als es der Orientierung der Primärpartikel im einzelnen schuppenförmigen Agglomerat entspricht.

Die Agglomeratgröße der erfindungsgemäßen Agglomerate kann als Kornband der Siebung angegeben werden, beispielsweise durch die Angabe "< 350 µm" oder "100 - 200 µm", oder auch als durch Messung der Agglomeratgrößenverteilung ermittelte mittlere Agglomeratgröße ($d_{50}$). Die Agglomeratgrößenverteilung kann mittels Laserbeugung gemessen werden (Trockenmessung, Mastersizer 2000, Malvern, Deutschland).

Die erfindungsgemäßen Agglomerate können Agglomeratgrößen von mehreren Zentimetern aufweisen. Für die Weiterverarbeitung oder Anwendung sind abhängig von der jeweiligen Zielstellung Agglomeratgrößen bis etwa 1 cm sinnvoll. Beim Einsatz als Füllstoff für Polymere werden üblicherweise die unterschiedlichsten Materialien mit Agglomeratgrößen bis 3 mm eingesetzt, vorzugsweise von bis zu 1 mm. Weiter vorzugsweise werden mittlere Agglomeratgrößen ($d_{50}$) von bis zu 500 µm, weiter vorzugsweise von bis zu 200 µm eingesetzt. Der $d_{50}$-Wert beträgt vorzugsweise wenigstens 30 µm. Besonders bevorzugt werden enge Kornbänder wie beispielsweise 100 bis 300 µm, 1 bis 2 mm oder 50 bis 150 µm eingesetzt.

Die erfindungsgemäßen schuppenförmigen Agglomerate können eine Dicke von 10 bis 500 µm aufweisen, vorzugsweise von 15 bis 350 µm, besonders bevorzugt von 30 bis 200 µm.

Das Aspektverhältnis, d.h. das Verhältnis Agglomeratdurchmesser zu Agglomeratdicke, der schuppenförmigen Agglomerate kann anhand von REM-Aufnahmen ermittelt werden, indem Agglomeratdurchmesser und -dicke vermessen werden.

Das Aspektverhältnis der erfindungsgemäßen schuppenförmigen Agglomerate liegt bei einem Wert von größer als 1, vorzugsweise bei Werten von 1,5 und mehr, weiter vorzugsweise bei Werten von 2 und mehr.

Die Dichte der erfindungsgemäßen Agglomerate beträgt vorzugsweise 1,6 g/cm$^3$ und mehr, vorzugsweise 1,8 g/cm$^3$ und mehr und besonders bevorzugt 2,0 g/cm$^3$ und mehr.

Die Bestimmung der Dichte der erfindungsgemäßen Agglomerate kann an Agglomeraten einer Größe von etwa 1 - 5 cm$^2$ archimedisch als Auftriebsdichte in Wasser erfolgen oder geometrisch an durch Schneiden hergestellten Agglomeraten einer Größe von etwa 1 cm x 1 cm.

Für die Anwendung als Füllstoff für Polymere ist es vorteilhaft, Füllstoffe bzw. Agglomerate mit möglichst niedriger spezifischer Oberfläche (BET) einzusetzen, da dadurch die Wärmeübergangswiderstände vom Füllstoff zum Polymer minimiert werden. Mit dem erfindungsgemäßen Verfahren können Bornitrid-Agglomerate mit sehr kleinen, gegenüber den Agglomeraten des Stands der Technik deutlich kleineren, spezifischen Oberflächen hergestellt werden.

Die erfindungsgemäßen texturierten Agglomerate haben auf ihrer Ober- und Unterseite durch das Formgebungsverfahren unmittelbar erzeugte, nicht durch Zerkleinern hergestellte Oberflächen. Diese als "Formgebungsflächen" bezeichnete Oberflächen sind vergleichsweise glatt im Unterschied zu den rauen seitlichen Oberflächen (Bruchflächen) der Agglomerate, die durch Brechen bzw. Zerkleinerungsschritte entstanden sind. Die Oberflächen der erfindungsgemäßen schuppenförmigen Agglomerate sind im wesentlichen eben (planar) und ihre Ober- und Unterseite sind weitgehend parallel zueinander.

Der Anteil der Formgebungsfläche an der Gesamtoberfläche der erfindungsgemäßen Agglomerate beträgt bei Annahme einer Plättchen- bzw. Schuppenform mit runder Grundfläche durchschnittlich mindestens 33% (falls der Durchmesser der Agglomerate gleich ihrer Höhe ist) und bei Annahme einer Plättchen- bzw. Schuppenform mit quadratischer Grundfläche ebenfalls mindestens 33% (für die Würfelform). Für erfindungsgemäße Agglomerate mit hohem Aspektverhältnis liegt der Anteil der Formgebungsfläche an der Gesamtoberfläche deutlich höher, für Agglomerate mit einem Aspektverhältnis > 3,0 liegt der Anteil üblicherweise zwischen 60 und 95%, für sehr große Agglomerate kann der Anteil noch höher liegen. Durch Verrunden der Agglomerate oder als Folge eines Sieb- bzw. Klassierungsprozesses kann sich der Anteil der Formgebungsfläche an der Gesamtoberfläche reduzieren, in der Regel beträgt der Anteil aber stets wenigstens 10%, vorzugsweise wenigstens 20%.

Das Verhältnis von Formgebungsfläche zu Gesamtoberfläche kann durch Auswertung von REM-Aufnahmen ermittelt werden. Dazu werden die zur Bestimmung des Aspektverhältnisses ermittelten Werte für Agglomeratdurchmesser und -dicke verwendet. Aus diesen Werten wird der Anteil der Formgebungsfläche an der Gesamtoberfläche wie folgt ermittelt:

$$\text{Anteil Formgebungsfläche } [\%] = 2 * \text{Stirnfläche} / \text{Gesamtoberfläche} * 100$$

wobei

> Stirnfläche = Agglomeratdurchmesser * Agglomeratdurchmesser
> Gesamtoberfläche = 2 * Stirnfläche + 4 * Seitenfläche
> Seitenfläche = Agglomeratdicke * Agglomeratdurchmesser

Zur Herstellung der erfindungsgemäßen texturierten Agglomerate wird Bornitrid-Pulver aus hBN zwischen zwei sich drehenden gegenläufigen Walzen zu texturierten Agglomeraten verpresst.

Dazu wird Bornitrid-Pulver bzw. das zur Agglomerierung eingesetzte, Bornitrid-Pulver umfassende Ausgangsmaterial, kontinuierlich, in gleichmäßiger Menge in den Zwischenraum zweier gegenläufig drehender Walzen dosiert. Durch die gegenläufige Drehung der Walzen wird die Scherung der Agglomerate minimiert. Die Spaltweite, d. h. der Abstand der Walzen, beträgt vorzugsweise höchstens 500 μm. In einer bevorzugten Ausführungsform werden die Walzen mit definiertem Anpressdruck gegeneinander gedrückt. Dabei wird dann kein definierter Spalt zwischen den beiden Walzen eingestellt, die Walzen berühren sich vielmehr. Das aufliegende bzw. anhaftende Bornitrid-Pulver wird mitgezogen und zwischen den Walzen hoch verdichtet (stark kompaktiert). Falls zwischen den beiden Walzen kein Spalt eingestellt wurde, werden die Walzen beim Kompaktiervorgang durch die texturierten Agglomerate auseinandergedrückt, wobei der so entstandene Spalt der Dicke der Agglomerate entspricht. Das zur Herstellung der Walzen eingesetzte Material sollte eine möglichst hohe Härte aufweisen, so dass sich die Walzspaltgeometrie nicht verändert. Die Walzen können aus einem keramischen Material hergestellt werden, beispielsweise aus Siliziumnitrid.

Bei der Dosierung des Bornitrid-Pulvers in den Zwischenraum der beiden Walzen ist darauf zu achten, daß ausreichend Bornitrid-Pulver in den Zwischenraum der beiden Walzen gelangt, so dass die Partikel im Walzspalt miteinander in Kontakt kommen und kompaktiert werden. Bei einer zu geringen Dosierung erfolgt keine oder nur eine geringe Kompaktierung und es entstehen keine oder kaum Agglomerate. Bei einer ausreichenden Dosierung stellt sich ein maximales Füllvolumen oberhalb des Walzenspalts ein, abhängig von Walzengeometrie, Walzparametern und Ausgangspulver. Bei einer zu starken Dosierung kann es zum "Überlaufen" des Bereichs oberhalb des Walzenspalts kommen. Bei Einsatz eines zu groben Ausgangsmaterials kann es zu einer Verstopfung des Walzspalts und zur Blockierung der Walzen kommen.

Es ist auch möglich, die Walzen mit einer Oberflächenstrukturierung zu versehen. Beispielweise kann eine Oberflächenstrukturierung eingesetzt werden, um Sollbruchstellen in den schuppenförmigen Agglomeraten zu erzeugen, die die Größe und Form der Agglomerate bestimmen. Die kompaktierten Agglomerate können so leicht zu Agglomeraten einer definierten Größe und Form zerkleinert werden. Dabei kann durch die Strukturierung der Walze beispielsweise eine planar-vieleckige Agglomeratform eingestellt werden.

Als Bornitrid-Pulver können hexagonales Bornitrid sowie Mischungen von hexagonalem Bornitrid mit amorphem Bornitrid eingesetzt werden sowie teilkristallines Bornitrid.

Die mittlere Partikelgröße $d_{50}$ des eingesetzten hexagonalen Bornitrid-Pulvers beträgt 0,5 - 15 μm. So können beispielsweise hexagonale Bornitrid-Pulver mit einer mittleren Partikelgröße von 1 μm, 3 μm, 6 μm, 9 μm und 15 μm eingesetzt werden. Ebenso können Mischungen verschiedener hexagonaler Bornitrid-Pulver mit unterschiedlichen Partikelgrößen eingesetzt werden. Die Messung der mittleren Partikelgröße ($d_{50}$) der eingesetzten Bornitrid-Pulver erfolgt üblicherweise mittels Laserbeugung (Naßmessung, Mastersizer 2000, Malvern).

Es können $B_2O_3$-freie Bornitrid-Pulver sowie Bornitrid-Pulver mit geringeren $B_2O_3$-Gehalten von bis zu 0,5 Gew.-%, aber auch mit höheren $B_2O_3$-Gehalten von bis zu 10 Gew.-% und mehr eingesetzt werden.

Es ist auch möglich, Bornitrid-Granulate wie beispielsweise Aufbaugranulate und Sprühgranulate aus hexagonalem Bornitrid einzusetzen, oder auch die bei der Synthese des hexagonalen Bornitrid herstellungsbedingt entstehenden Agglomerate. Das für die Walzenkompaktierung eingesetzte Bornitrid kann auch mittels Additiven oberflächenbeschichtet sein, wobei die Additive vorzugsweise ausgewählt sind aus der Gruppe umfassend Polymere, metallorganische Verbindungen, Silane, Öle, Carbonsäuren, Copolymere, hydrolysierte Monomere, teilhydrolysierte Monomere, teilweise kondensierte Monomere und Nanopartikel.

Es ist auch möglich, Mischungen aus pulverförmigem oder granuliertem Bornitrid und anderen Pulvern einzusetzen und somit Mischagglomerate herzustellen ("Hybrid-Flakes"). Dabei können weitere Partikel, ausgewählt aus der Gruppe, umfassend Carbide, Boride, Nitride, Oxide, Hydroxide, Kohlenstoff und Metalle eingesetzt werden. Diese Stoffe können sowohl als Partikel, aber auch als Fasern oder Plättchen in beliebiger Feinheit eingesetzt werden. Weiterhin können auch Polymere zusammen mit Bornitrid zu texturierten Agglomeraten verarbeitet werden. Beispielsweise können dem Bornitrid-Pulver $SiO_2$-Pulver, vorzugsweise nanoskaliges $SiO_2$-Pulve wie etwa hochdisperse Kieselsäure, oder auch Aluminiumoxid, Böhmit oder $Al(OH)_3$, vorzugsweise als nanoskalige Pulver, oder auch Aluminiumnitrid zugesetzt werden. Werden Metallpartikel zugesetzt, so können diese bei einer an die Kompaktierung anschließenden Temperaturbehandlung unter Stickstoff nitridiert werden. Weiterhin können Polymere und Vorläufer keramischer Substanzen wie beispielsweise Salze oder Alkoxide zugesetzt werden. Auch Mischungen der angegebenen Zusatzstoffe können zusammen mit hexagonalem Bornitrid zur Herstellung von Mischgranulaten eingesetzt werden, weiterhin können auch Mischgranulate aus derartigen Pulvermischungen zur Kompaktierung eingesetzt werden. Es ist auch möglich, die Zusatzstoffe in Form von Granulaten einzusetzen und in einer Mischung zusammen mit pulverförmigem oder granuliertem Bornitrid als Ausgansmaterial für die Kompaktierung einzusetzen.

Ebenso können zur Kompaktierung Sprüh- und Aufbaugranulate von hexagonalen Bornitrid-Pulvern mit Sol-Gel-Bindern wie beispielsweise Böhmit, MTEOS (Methyltriethoxysilan), Natronwasserglas, Kieselsol und Gemische mit Nanopartikeln eingesetzt werden, oder auch Sol-Gel-beschichtete Bornitrid-Pulver, wobei zur Beschichtung Sol-Gel-Systeme wie beispielsweise Böhmit, MTEOS (Methyltriethoxysilan), Natronwasserglas, Kieselsol und Gemische mit Nanopartikeln eingesetzt werden können.

In Abhängigkeit der Beschaffenheit der Pulvermaterialien, insbesondere ihrer Ausgangspartikelgröße und Größenverteilung, resultieren nach dem Durchgang durch die Walzen unterschiedlich große Flakes mit unterschiedlichem Durchmesser und einheitlicher Dicke, daneben sind in der Regel noch Anteile an unkompaktiertem Material vorhanden.

Der Kompaktiervorgang kann mehrfach wiederholt werden. Durch 2- oder 3-fache Kompaktierung kann der unkompaktierte Feinanteil von bis zu 50 Gew.-% auf unter 5 Gew.-% reduziert werden. Dabei ist eine Zunahme der Größe der Agglomerate zu verzeichnen, sowohl bezüglich des Durchmessers als auch ihrer Dicke.

Zwischen zwei aufeinanderfolgenden Kompaktierungsschritten kann der angefallene, unkompaktierte Feinanteil durch eine Siebung abgetrennt und in den vorhergehenden Schritt zurückgeführt werden.

Der Feinanteil kann aber auch beim Kompaktierungsprodukt belassen und nicht abgetrennt werden. In diesem Fall wird der angefallene Feinanteil in einem folgenden Verdichtungsschritte minimiert, da er ebenfalls zu Agglomeraten verpresst wird.

Bei Einsatz eines feinen Ausgangsmaterials mit einer mittleren Partikelgröße ($d_{50}$) von ca. 1 $\mu$m können beispielsweise bei einer ersten Kompaktierung Agglomerate mit einem Kornband von 1 - 4 mm erhalten werden. Bei einer zweiten Kompaktierung kann der Agglomeratdurchmesser bis auf ca. 1 cm ansteigen. In einer letzten Kompaktierung können bis zu 2 cm große texturierte Agglomerate erhalten werden.

Bei Einsatz eines gröberen Ausgangsmaterials aus Primärpartikeln mit einer mittleren Partikelgröße ($d_{50}$) von 15 $\mu$m können beispielsweise im ersten Durchgang 1 - 2 cm große texturierte Agglomerate erhalten werden, im zweiten Durchgang 3 - 4 cm große texturierte Agglomerate, im letzten Kompaktierungsschritt sind 5 - 7 cm möglich.

Werden als Ausgangsmaterial nicht Pulver, sondern Aufbaugranulate, Sprühgranulate oder dergleichen eingesetzt, so können aus Granulaten mit einer mittleren Granulatgröße von beispielsweise 100 - 200 $\mu$m im ersten Durchgang texturierte Agglomerate einer Größe von mehreren Zentimetern hergestellt werden, im zweiten Durchgang werden "Endlos"-Agglomerate erhalten.

Vor einer Kompaktierung ist gegebenenfalls in Abhängigkeit vom einzusetzenden Ausgangsmaterial eine Schutzsiebung oder Klassierung vorteilhaft, um eine Beschädigung oder ein Blockieren der Walzen zu verhindern.

Das zu texturierten Agglomeraten kompaktierte Material kann einem thermischen Behandlungsschritt, einer Sinterung, unterzogen werden. Durch die Temperaturbehandlung der Agglomerate kann die mechanische Stabilität und somit auch die Verarbeitbarkeit, beispielsweise die Dosierbarkeit, weiter verbessert werden.

Auch die in Bornitrid-Polymer-Verbundwerkstoffen erzielbare Wärmeleitfähigkeit kann durch eine Sinterung der schuppenförmigen Agglomerate weiter erhöht werden.

Bei der Temperaturbehandlung können sich die Eigenschaften der Agglomerate und der Primärpartikel verändern. Der Kristallisationsgrad der Primärpartikel kann zunehmen, was mit einem Primärpartikelwachstum verbunden ist. Der Gittersauerstoffgehalt und die spezifische Oberfläche nehmen mit steigender Glühtemperatur und Glühdauer ab. Dichte, Härte und mechanische Stabilität können in Abhängigkeit von Glühtemperatur und Glühdauer maximiert werden.

Abhängig von den Sinterbedingungen und der Beschaffenheit der texturierten Agglomerate werden lose, einzeln vorliegende, keramisch klingende Agglomerate erhalten oder ein Sinterkuchen aus den texturierten Agglomeraten, welcher beispielsweise durch Rütteln oder Sieben aufgebrochen und zu losen Agglomeraten vereinzelt werden kann.

Die Temperaturbehandlung kann bei einer Temperatur von bis zu 2300°C, vorzugsweise im Temperaturbereich von 1200 - 2050 °C, weiter vorzugsweise von 1400 - 2000 °C und insbesondere bevorzugt von 1600 - 1950 °C in einer Schutzgasatmosphäre durchgeführt werden. Bei den Mischagglomeraten (Hybrid-Flakes) kann die Temperaturbehandlung beispielsweise bei Temperaturen bis zu 2000°C in einer Schutzgasatmosphäre oder an Luft oder auch mit einem Reaktionsgas wie beispielsweise Ammoniak oder Kohlenmonoxid oder Gasgemischen durchgeführt werden. Nach Erreichen der Maximaltemperatur kann eine Haltezeit von bis zu mehreren Stunden oder Tagen eingelegt werden. Als Schutzgas kann Stickstoff oder Argon eingesetzt werden. Die Temperaturbehandlung kann in einem kontinuierlichen oder in einem Batch-Verfahren durchgeführt werden.

Nach der Kompaktierung oder nach der gegebenenfalls anschließenden Temperaturbehandlung können die erhaltenen Agglomerate bzw. der Sinterkuchen auf die angestrebte Zielagglomeratgröße aufbereitet werden.

Die Zielgröße für die Agglomeratgröße hängt hauptsächlich von der jeweiligen Anwendung ab. Bei der Anwendung als Füllstoff für Polymere hängt sie beispielsweise von der beabsichtigten Verarbeitungstechnik und dem angestrebten Füllgrad ab, wobei die Eigenschaften des jeweiligen Kunststoffs und Verarbeitungsparameter wie beispielsweise die Viskosität berücksichtigt werden müssen, und kann an die jeweiligen Anwendungsbedingungen angepasst werden, wie beispielsweise die Anwendung als Füllstoff für Thermoplaste, als Füllstoff für Duroplaste, die Verarbeitung über Spritzguss, Extrusion oder Gießharz und Folienextrusion.

Zur Erreichung der Zielagglomeratgröße können übliche Schritte wie Sieben, Siebbrechen und Sichten eingesetzt werden. Gegebenenfalls enthaltener Feinanteil kann als erstes entfernt werden. Die mehrere Millimeter bis mehrere Zentimeter großen Agglomerate werden in einem weiteren Prozessschritt auf definierte Agglomeratgrößen verarbeitet. Hierzu können beispielsweise handelsübliche Siebe unterschiedlicher Siebweite und Siebhilfen auf einem Rüttelsieb verwendet werden. Ein mehrstufiger Sieb-/Siebzerkleinerungsprozess hat sich als vorteilhaft erwiesen.

Die Agglomerate können zur Erreichung der Zielagglomeratgröße nach der Kompaktierung bzw. nach der Glühung und der gegebenenfalls durchgeführten Entfernung des Feinanteils zunächst vorzugsweise durch ein Sieb mit einer Maschenweite von 3 - 4 mm gearbeitet werden. Einfache Siebhilfen, wie Gummibälle oder Kunststoffringe sind hierzu ausreichend, um durch rüttelnde Bewegung die Agglomerate zu brechen, die typischerweise eine Dicke von ca. 30 bis 350 μm aufweisen. Unterhalb einer Siebweite von 1 mm können zur weiteren Siebzerkleinerung Stahlkugeln, vorzugsweise Gummi-ummantelte Stahlkugeln, eingesetzt werden, um Agglomeratfraktionen von beispielsweise < 700 μm, < 500 μm oder < 350 μm zu erhalten.

Bei den Fraktionierungsschritten fallen in unterschiedlichem Umfang feinere Agglomeratanteile an. Es können beispielsweise Fraktionen < 200 μm, < 150 μm und < 100 μm in sinkender Menge isoliert werden. Um feinere Agglomeratgrößen unterhalb von 350 μm mit enger Agglomeratgrößenverteilung zu erhalten, können diese aus der wie oben beschrieben erhaltenen Fraktion < 350 μm wiederum mittels Siebung oder auch mittels Sichten hergestellt werden. So können beispielsweise Fraktionen von 100 - 200 μm, 80 - 150 μm und 150 - 200 μm erhalten werden. Agglomeratfraktionen unterhalb von 100 μm werden vorzugsweise über Sichtung hergestellt, um die Ober- und Untergrenzen der Agglomeratgrößen besser einhalten zu können.

Alternativ zum Sieben kann die definierte Zerkleinerung von texturierten Agglomeraten auch über Siebreiben, Sichtermühlen, strukturierte Walzenbrecher und Schneidräder erfolgen. Auch eine Trockenmahlung beispielsweise in einer Kugelmühle ist möglich.

Für den Einsatz der texturierten Agglomerate für bestimmte Anwendungen ist es vorteilhaft, die erhaltenen Agglomeratgrößenfraktionen einer weiteren, spezifischen Behandlung zu unterziehen. Beispiele für solche Behandlungen sind eine naßchemische Aufbereitung, um anhaftendes $B_2O_3$ oberflächlich zu entfernen, eine Oberflächenmodifizierung mittels Additiven, eine Beschichtung mittels Wirbelschichtverfahren und eine thermische/oxidative Aktivierung. Die Oberflächenmodifizierung mittels Additiven kann beispielsweise über Adsorption aus einer Suspension erfolgen. Als Beschichtungsmittel können beispielsweise Polymere, metallorganische Verbindungen, Silane, Öle, Carbonsäuren, Copolymere, hydrolysierte, teilhydrolysierte und teilweise kondensierte Monomere, Nanopartikel wie beispielsweise $SiO_2$-Nanopartike und oberflächenfunktionalisierte Nanopartikel wie beispielsweise oberflächenfunktionalisierte $SiO_2$-Nanopartikel eingesetzt werden. Die zur Oberflächenmodifizierung eingesetzten Additive können als Netzmittel oder als Haftvermittler dienen.

In einer weiteren Ausgestaltung der Erfindung können durch Zerkleinerung von beispielsweise 100 oder 200 μm dicken, großen schuppenförmigen Agglomeraten mit einer Multiklinge, deren Klingenabstand deutlich kleiner als die Dicke der Agglomerate ist und beispielsweise 50 μm beträgt oder durch eine mit Vibration angeregte Klinge Nadeln und schuppenförmige Agglomerate erzeugt werden, die anschließend wie zuvor beschrieben durch einen mehrstufigen Siebprozess zerkleinert und in Agglomeratfraktionen getrennt werden. So hergestellte texturierte Agglomerate zeigen eine umgekehrte Vorzugsorientierung der Bornitrid-Primärpartikel, mit ihren Basalebenen senkrecht zur Grundfläche des schuppenförmigen Agglomerats. Die Bestimmung des Texturindex an so hergestellten texturierten Agglomeraten führt zu Werten von 0,7 oder weniger, vorzugsweise von 0,5 oder weniger, weiter vorzugsweise von 0,35 oder weniger, besonders bevorzugt von 0,3 oder weniger. Durch diese Orientierung können in gefüllten Polymeren höhere through-plane- als in-plane-Wärmeleitfähigkeitswerte erzielt werden, da sich die so hergestellten schuppenförmigen Agglomerate in den gefüllten Polymeren ausrichten können, insbesondere wenn das Aspektverhältnis der Agglomerate > 2,0 ist. Die Ausrichtung kann beispielsweise durch Vergießen dünner Platten oder beim Spritzgießen erfolgen.

Die erfindungsgemäßen texturierten Agglomerate können nach der Kompaktierung oder nach einer gegebenenfalls anschließenden Temperaturbehandlung mechanisch behandelt werden. Die mechanische Behandlung kann beispielsweise auf dem Rollenbock im Kunststoffbehälter ohne Kugeln (mit einem Füllgrad von 30 Vol.-% ein bis zwei Stunden lang) oder auch im Taumelmischer mechanisch behandelt werden. Durch diese Behandlung werden Ecken und Kanten der texturierten Agglomerate verrundet und es können höhere Feststoffgehalte und Wärmeleitfähigkeitswerte in Polymer-Bornitrid-Verbundwerkstoffen erzielt werden.

Neben dem beschriebenen Verfahren der Kompaktierung zwischen zwei Walzen können auch andere Verfahren zur Herstellung der erfindungsgemäßen texturierten Agglomerate eingesetzt werden.

Eine Alternative besteht darin, auf einer Trägerfolie eine Pulverschicht aufzubringen, beispielsweise durch Aufsprühen einer Bornitrid-Suspension. Bei kontrollierter Verdampfung des Suspensionsmediums bildet sich bereits vor der Kompaktierung eine Textur aus. Durch eine anschließende gemeinsame Verpressung von Trägerfolie und Pulverschicht lässt sich die Textur weiter verstärken. Die Trägerfolie kann anschließend entfernt werden, oder auch in einem anschließenden Temperaturbehandlungsschritt zersetzt werden. Die resultierende kompaktierte Pulverschicht kann wie oben beschrieben durch Brechen und Sieben zu texturierten Agglomeraten verarbeitet werden.

Eine weitere Möglichkeit besteht im Folienguß mittels Doctorblade, die dabei erhaltene Folie wird anschließend verpresst oder gewalzt, in Abhängigkeit von den eingesetzten organischen Bindern mittels beheizten Walzen verdichtet und über Schneiden zu texturierten Agglomeration zerkleinert. Gegebenenfalls kann eine Temperaturbehandlung der Agglomerate vor oder nach dem Schneiden erfolgen.

Die erfindungsgemäßen Agglomerate können als Füllstoff für Polymere eingesetzt und zu Polymer-Bornitrid-Verbundwerstoffen verarbeitet werden. Dabei können zur Herstellung der gefüllten Polymere auch Mischungen der erfindungsgemäßen Agglomerate mit anderen bekannten Füllstoffen für Polymere, wie beispielsweise Aluminiumoxid, eingesetzt werden. Ebenso können zur Herstellung der gefüllten Polymere Mischungen unterschiedlicher Fraktionen erfindungsgemäßer Agglomerate eingesetzt werden sowie Mischungen solcher Fraktionen mit Primärpartikelfraktionen.

Die erfindungsgemäßen Agglomerate, sowohl reine Bornitrid-Agglomerate als auch Mischgranulate ("Hybrid-Flakes"), eignen sich als Ausgangsmaterial zur Herstellung von Bornitrid-Sinterwerkstoffen und Bornitrid-Mischkeramiken. Vorzugsweise erfolgt die Herstellung der Bornitrid-Sinterwerkstoffe und Bornitrid-Mischkeramiken mittels Heißpressen oder Heißisostatpressen. Vorzugsweise werden dazu ungeglühte sowie bei niedrigen Temperaturen bis etwa 1600 °C geglühte, beispielsweise entbinderte oder calcinierte, Agglomerate eingesetzt. Die hohe Dichte und hohe Schüttdichte der erfindungsgemäßen Agglomerate gewährleisten deutlich höhere Formfüllgrade und Gründichten und damit eine effizientere Verdichtung, als dies mit herkömmlichen kaltisostatisch gepressten Granulaten, Aufbau- oder Sprühgranulaten möglich war. Bei Verwendung der erfindungsgemäßen Agglomerate als Ausgangsmaterial zum Heißpressen können heißgepresste Bornitrid-Sinterkörper mit stark ausgeprägter Textur und stark ausgeprägten anisotropen Eigenschaften erhalten werden. Weiterhin können texturierte Agglomerate mit nicht agglomerierten Bornitrid-Pulvern gemischt werden, um als Verstärkungselemente oder Keime für die Kristallisation des hexagonalen Bornitrids während des Heißpressens zu dienen. Besonders vorteilhaft ist hierbei die Mischung von geglühten texturierten Agglomeraten mit turbostratischem Bornitrid. Durch den Einsatz von texturierten Agglomeraten können Eigenschaftsverbesserungen bei Bornitrid-Sinterkörpern erreicht werden, wie beispielsweise eine Erhöhung der mechanischen Festigkeit. Weiterhin können Bornitrid-Mischkeramiken, beispielsweise auf Basis von Bornitrid und Siliziumnitrid, auf Basis von Bornitrid und Zirkoniumdioxid und auf Basis von Bornitrid, Zirkoniumdioxid und Siliziumcarbid, mit erfindungsgemäßen texturierten Agglomeraten hergestellt werden. Das Heißpressen erfolgt in Graphitmatrizen bei Temperaturen von etwa 1600 bis 2000 °C und einem Druck bis etwa 25 MPa. Der am Sinterkörper gemessene Texturindex von mit erfindungsgemäßen Agglomeraten hergestellten heißgepressten Bornitrid-Sinterkörpern kann bei Werten bis 120 und mehr liegen. Die Messung des Texturindex erfolgt dabei an Proben, die senkrecht zur Heißpressrichtung präpariert werden. Der am Sinterkörper gemessene Texturindex liegt bei Werten von wenigstens 2, weiter vorzugsweise bei Werten von wenigstens 3, weiter vorzugsweise bei Werten von wenigstens 5, weiter vorzugsweise bei Werten von wenigstens 10 und besonders bevorzugt bei Werten von 20 und mehr. Die erfindungsgemäßen Agglomerate können auch für andere Anwendungen eingesetzt werden, beispielsweise als Rohstoff für die Synthese von kubischem Bornitrid, und auch als lose Schüttung für Heizpatronen.

Beispiele

Die nachfolgenden Beispiele dienen zur weiteren Erläuterung der Erfindung.

Beispiel 1:

Hexagonales Bornitrid-Pulver mit einer Primärpartikelgröße $d_{50}$ von 3 $\mu$m (gemessen mittels Mastersizer 2000, Malvern, Naßmessung; Fa. ESK Ceramics GmbH & Co. KG, BORONID S1) wird mittels Vibrorinne kontinuierlich zwischen zwei spaltlos angeordnete Walzen aus Siliziumnitrid dosiert. Die Walzenbreite beträgt 150 mm, der Walzendurchmesser 13 cm. Die Walzen werden mit 15 U/min. gedreht und mit einer Kraft von 1,7 to. gegeneinander gepresst. Das Bornitrid-Pulver wird so mit einem Durchsatz von 4 kg/h walzenkompaktiert.

Das resultierende Material ist granuliertes Material in Form von Flakes mit einer Dicke von etwa 50 $\mu$m sowie ein Feinanteil von nicht kompaktiertem Ausgangsmaterial. Das erhaltene Material wird anschließend bei 1200°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 $\mu$m gebrochen und anschließend durch weitere Siebung auf > 210 $\mu$m und > 100 $\mu$m fraktioniert, um den Feinanteil < 100 $\mu$m von 55 Gew.-% (bezogen auf die gesamte Menge der geglühten Agglomerate) abzutrennen.

Beispiel 2:

Hexagonales Bornitrid-Pulver mit einer Primärpartikelgröße $d_{50}$ von 3 $\mu$m wird mittels Vibrorinne kontinuierlich dosiert und mit einem Durchsatz von 4 kg/h wie in Beispiel 1 walzenkompaktiert.

Das resultierende Material ist granuliertes Material in Form von Flakes mit einer Dicke von etwa 50 $\mu$m sowie ein Feinanteil von nicht kompaktiertem Ausgangsmaterial und wird anschließend durch Sieben auf < 100 $\mu$m entstaubt, dabei werden 46 Gew.-% des beim Walzenkompaktieren erhaltenen Materials als Feinanteil abgetrennt. Die abgetrennte Grobfraktion wird anschließend bei 1200°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 $\mu$m gebrochen und anschließend durch weitere Siebung auf > 210 $\mu$m und > 100 $\mu$m fraktioniert, um den Feinanteil < 100 $\mu$m von 5 Gew.-% abzutrennen.

Beispiel 3:

Hexagonales Bornitrid-Pulver mit einer Primärpartikelgröße $d_{50}$ von 3 $\mu$m wird mittels Vibrorinne kontinuierlich dosiert und mit einem Durchsatz von 4 kg/h wie im Beispiel 1 walzenkompaktiert.

Das resultierende Material ist granuliertes Material in Form von Flakes mit einer Dicke von etwa 50 $\mu$m sowie ein Feinanteil von nicht kompaktiertem Ausgangsmaterial und wird anschließend durch Sieben auf < 100 $\mu$m entstaubt, dabei werden 46 Gew.-% des beim Walzenkompaktieren erhaltenen Materials als Feinanteil abgetrennt. Die abgetrennte Grobfraktion wird anschließend bei 1600°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 $\mu$m gebrochen und anschließend durch weitere Siebung auf > 210 $\mu$m und > 100 $\mu$m fraktioniert, um den Feinanteil < 100 $\mu$m von 4 Gew.-% abzutrennen.

Beispiel 4:

Hexagonales Bornitrid-Pulver mit einer Primärpartikelgröße $d_{50}$ von 3 $\mu$m wird mittels Vibrorinne kontinuierlich dosiert und mit einem Durchsatz von 4 kg/h wie im Beispiel 1 walzenkompaktiert.

Das resultierende Material ist granuliertes Material in Form von Flakes mit einer Dicke von etwa 50 $\mu$m sowie ein Feinanteil von nicht kompaktiertem Ausgangsmaterial und wird anschließend durch Sieben auf < 100 $\mu$m entstaubt, dabei werden 46 Gew.-% des beim Walzenkompaktieren erhaltenen Materials als Feinanteil abgetrennt. Die abgetrennte Grobfraktion wird anschließend bei 1950°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 $\mu$m gebrochen und anschließend durch weitere Siebung auf > 210 $\mu$m und > 100 $\mu$m fraktioniert, um den Feinanteil < 100 $\mu$m von 3 Gew.-% abzutrennen.

Beispiel 5:

Hexagonales Bornitrid-Pulver mit einer Primärpartikelgröße $d_{50}$ von 3 $\mu$m wird mittels Vibrorinne kontinuierlich dosiert und mit einem Durchsatz von 4 kg/h wie im Beispiel 1 walzenkompaktiert.

Das resultierende Material wird anschließend ein zweites Mal mit einem Durchsatz von 5,8 kg/h kompaktiert. Das resultierende Material ist granuliertes Material in Form von Flakes mit einer Dicke von etwa 50 bis 100 $\mu$m sowie ein Feinanteil von nicht kompaktiertem Ausgangsmaterial und wird anschließend durch Sieben auf < 100 $\mu$m entstaubt, dabei werden 26 Gew.-% des beim Walzenkompaktieren erhaltenen Materials als Feinanteil abgetrennt. Die abgetrennte Grobfraktion wird anschließend bei 1950°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 $\mu$m gebrochen und anschließend durch weitere Siebung auf > 210 $\mu$m und > 100 $\mu$m fraktioniert, um den Feinanteil < 100 $\mu$m von 3 Gew.-% abzutrennen.

Beispiel 6:

Hexagonales Bornitrid-Pulver mit einer Primärpartikelgröße $d_{50}$ von 3 $\mu$m wird mittels Vibrorinne kontinuierlich dosiert und mit einem Durchsatz von 4 kg/h wie im Beispiel 1 walzenkompaktiert.

Das resultierende Material wird anschließend ein zweites Mal mit einem Durchsatz von 5,8 kg/h sowie ein drittes Mal mit einem Durchsatz von 7 kg/h kompaktiert. Nach jedem Walzdurchgang wird das erhaltene granulierte Material durch Sieben auf < 100 $\mu$m entstaubt, dabei werden zuletzt 5 Gew.-% des beim Walzenkompaktieren erhaltenen Materials als Feinanteil abgetrennt. Die Dicke der erhaltenen Agglomerate in Form von Flakes beträgt etwa 50 bis 200 $\mu$m. Die abgetrennte Grobfraktion wird anschließend bei 1950°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 $\mu$m gebrochen und anschließend durch weitere Siebung auf > 210 $\mu$m und > 100 $\mu$m fraktioniert, um den Feinanteil < 100 $\mu$m von 4 Gew.-% abzutrennen.

Beispiel 7 I):

Hexagonales Bornitrid-Pulver mit einer Primärpartikelgröße $d_{50}$ von 3 $\mu$m wird mittels Vibrorinne kontinuierlich dosiert und mit einem Durchsatz von 4 kg/h wie im Beispiel 1 walzenkompaktiert.

Das resultierende Material wird anschließend ein zweites Mal mit einem Durchsatz von 5 kg/h sowie ein drittes Mal mit einem Durchsatz von 6,5 kg/h kompaktiert. Zwischen jedem Kompaktiervorgang wurde der Feinanteil (< 100 $\mu$m) bestimmt, aber nicht abgetrennt. Das resultierende Material ist granuliertes Material in Form von Flakes mit einer Dicke von etwa 50 bis 200 $\mu$m und wird anschließend durch Sieben auf < 100 $\mu$m entstaubt, dabei werden 15 Gew.-% des beim Walzenkompaktieren erhaltenen Materials als Feinanteil abgetrennt.

Die abgetrennte Grobfraktion wird anschließend bei 1200°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 $\mu$m gebrochen und anschließend durch weitere Siebung fraktioniert.

Beispiel 7 I) A):

Es wird aus Beispiel 7 I) durch Sieben eine < 100 $\mu$m Fraktion hergestellt.

Beispiel 7 I) B):

Es wird aus Beispiel 7 I) durch Sieben eine 100 - 210 $\mu$m Fraktion hergestellt.

Beispiel 7 I) C):

Es wird aus Beispiel 7 I) durch Sieben eine 210 - 350 $\mu$m Fraktion hergestellt.

Für die Beispiele 7 I) A, B) und C) sind die an diesen Agglomeratfraktionen ermittelten Werte für den Texturindex und die spezifische Oberfläche nach der BET-Methode (Stickstoff-Adsorption, Beckmann-Coulter) in Tabelle 1 aufgeführt, außerdem ist in Tabelle 1 für die Beispiele 7 I) A) und B) das an REM-Aufnahmen ermittelte Aspektverhältnis aufgeführt.

Beispiel 7 II):

Beispiel 7 I) wurde wiederholt, jedoch wurde die nach dem dreimaligen Walzenkompaktieren abgetrennte Grobfraktion bei 1600 °C 2 Stunden in einer Stickstoff-Atmosphäre geglüht.

Beispiel 7 II) A):

Es wird aus Beispiel 7 II) durch Sieben eine < 100 $\mu$m Fraktion hergestellt.

Beispiel 7 II) B):

Es wird aus Beispiel 7 II) durch Sieben eine 100 - 210 $\mu$m Fraktion hergestellt.

Beispiel 7 II) C):

Es wird aus Beispiel 7 II) durch Sieben eine 210 - 350 $\mu$m Fraktion hergestellt.

Für die Beispiele 7 II) B) und C) sind die an diesen Agglomeratfraktionen ermittelten Werte für den Texturindex, die spezifische Oberfläche nach der BET-Methode (Stickstoff-Adsorption, Beckmann-Coulter) sowie das an REM-Aufnahmen ermittelte Aspektverhältnis in Tabelle 1 aufgeführt.

Beispiel 7 III):

Beispiel 7 I) wurde wiederholt, jedoch wurde die nach dem dreimaligen Walzenkompaktieren abgetrennte Grobfraktion bei 1950 °C 2 Stunden in einer Stickstoff-Atmosphäre geglüht.

Beispiel 7 III) A):

Es wird aus Beispiel 7 III) durch Sieben eine < 100 $\mu$m Fraktion hergestellt.
Die mittlere Agglomeratgröße ($d_{50}$) beträgt 78 $\mu$m.

Beispiel 7 III) B):

Es wird aus Beispiel 7 III) durch Sieben eine 100 - 210 $\mu$m Fraktion hergestellt.
Die mittlere Agglomeratgröße ($d_{50}$) beträgt 156 $\mu$m.

Beispiel 7 III) C):

Es wird aus Beispiel 7 III) durch Sieben eine 210 - 350 $\mu$m Fraktion hergestellt.
Die mittlere Agglomeratgröße ($d_{50}$) beträgt 347 $\mu$m.
Für die Beispiele 7 III) B) und C) sind die an diesen Agglomeratfraktionen ermittelten Werte für den Texturindex, die spezifische Oberfläche nach der BET-Methode (Stickstoff-Adsorption, Beckmann-Coulter) sowie das an REM-Aufnahmen ermittelte Aspektverhältnis in Tabelle 1 aufgeführt.

Beispiel 8:

Hexagonales Bornitrid-Pulver mit einer Primärpartikelgröße $d_{50}$ von 15 $\mu$m (gemessen mittels Mastersizer 2000, Malvern, Naßmessung; Fa. ESK Ceramics GmbH & Co. KG, BORONID S15) wird mittels Vibrorinne kontinuierlich dosiert und mit einem Durchsatz von 5,2 kg/h wie im Beispiel 1 walzenkompaktiert.
Das erhaltene granuliertes Material in Form von Flakes mit einer Dicke von etwa 50 $\mu$m enthält 28 Gew.-% < 100 $\mu$m. Es wird anschließend ohne vorherige Abtrennung des Feinanteils bei 1200°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 $\mu$m gebrochen und anschließend durch weitere Siebung auf > 210 $\mu$m und > 100 $\mu$m fraktioniert, um den Feinanteil < 100 $\mu$m von 30 Gew.-% abzutrennen.

Beispiel 9:

Hexagonales Bornitrid-Pulver mit einer Primärpartikelgröße $d_{50}$ von 15 $\mu$m wird mittels Vibrorinne kontinuierlich dosiert und mit einem Durchsatz von 5,2 kg/h wie im Beispiel 1 walzenkompaktiert.
Das erhaltene granulierte Material in Form von Flakes mit einer Dicke von etwa 50 $\mu$m wird anschließend durch Sieben auf < 100 $\mu$m entstaubt, dabei werden 28 Gew.-% des beim Walzenkompaktieren erhaltenen Materials als Feinanteil abgetrennt.
Die abgetrennte Grobfraktion wird anschließend bei 1200°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 $\mu$m gebrochen und anschließend durch weitere Siebung auf > 210 $\mu$m und > 100 $\mu$m fraktioniert, um den Feinanteil < 100 $\mu$m von 5 Gew.-% abzutrennen.

Beispiel 10:

Hexagonales Bornitrid-Pulver mit einer Primärpartikelgröße $d_{50}$ von 15 $\mu$m wird mittels Vibrorinne kontinuierlich dosiert und mit einem Durchsatz von 5,2 kg/h wie im Beispiel 1 walzenkompaktiert.
Das erhaltene granulierte Material in Form von Flakes mit einer Dicke von etwa 50 $\mu$m wird anschließend durch Sieben auf < 100 $\mu$m entstaubt, dabei werden 26 Gew.-% des beim Walzenkompaktieren erhaltenen Materials als Feinanteil abgetrennt.
Die abgetrennte Grobfraktion wird anschließend bei 1600°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 μm gebrochen und anschließend durch weitere Siebung auf > 210 μm und > 100 μm fraktioniert, um den Feinanteil < 100 μm von 4 Gew.-% abzutrennen.

Beispiel 11:

Hexagonales Bornitrid-Pulver mit einer Primärpartikelgröße $d_{50}$ von 15 μm wird mittels Vibrorinne kontinuierlich dosiert und mit einem Durchsatz von 5,2 kg/h wie im Beispiel 1 walzenkompaktiert.
Das erhaltene granulierte Material in Form von Flakes mit einer Dicke von etwa 50 μm wird anschließend durch Sieben auf < 100 μm entstaubt, dabei werden 26 Gew.-% des beim Walzenkompaktieren erhaltenen Materials als Feinanteil abgetrennt.
Die abgetrennte Grobfraktion wird anschließend bei 1950°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 μm. Zuletzt werden die resultierenden Flake-förmigen Agglomerate durch Siebung auf eine Größe kleiner 350 μm gebrochen und anschließend durch weitere Siebung auf > 210 μm und > 100 μm fraktioniert, um den Feinanteil < 100 μm von 2 Gew.-% abzutrennen.

Beispiel 12:

Hexagonales Bornitrid-Pulver mit einer Primärpartikelgröße $d_{50}$ von 15 μm wird mittels Vibrorinne kontinuierlich dosiert und mit einem Durchsatz von 5,2 kg/h wie im Beispiel 1 walzenkompaktiert.
Das resultierende Material wird anschließend ein zweites Mal mit einem Durchsatz von 8 kg/h kompaktiert. Das erhaltene granulierte Material in Form von Flakes mit einer Dicke von etwa 50 bis 100 μm wird durch Sieben auf < 100 μm entstaubt, dabei werden 16 Gew.-% des beim Walzenkompaktieren erhaltenen Materials als Feinanteil abgetrennt.
Die abgetrennte Grobfraktion wird bei 1950°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 μm. Zuletzt werden die resultierenden Flake-förmigen Agglomerate durch Siebung auf eine Größe kleiner 350 μm gebrochen und anschließend durch weitere Siebung auf > 210 μm und > 100 μm fraktioniert, um den Feinanteil < 100 μm von 3 Gew.-% abzutrennen.

Beispiel 13:

Hexagonales Bornitrid-Pulver mit einer Primärpartikelgröße $d_{50}$ von 15 μm wird mittels Vibrorinne kontinuierlich dosiert und mit einem Durchsatz von 5,2 kg/h wie im Beispiel 1 walzenkompaktiert.
Das resultierende Material wird anschließend ein zweites Mal mit einem Durchsatz von 8 kg/h sowie ein drittes Mal mit einem Durchsatz von 16 kg/h kompaktiert. Das erhaltene granulierte Material in Form von Flakes mit einer Dicke von etwa 50 bis 200 μm wird durch Sieben auf < 100 μm entstaubt, dabei werden 5 Gew.-% des beim Walzenkompaktieren erhaltenen Materials als Feinanteil abgetrennt.
Die abgetrennte Grobfraktion wird bei 1950°C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 μm. Zuletzt werden die resultierenden Flake-förmigen Agglomerate durch Siebung auf eine Größe kleiner 350 μm gebrochen und anschließend durch weitere Siebung auf > 210 μm und > 100 μm fraktioniert, um den Feinanteil < 100 μm von 4 Gew.-% abzutrennen.

Beispiel 14 I):

Hexagonales Bornitrid-Pulver mit einer Primärpartikelgröße $d_{50}$ von 15 μm wird mittels Vibrorinne kontinuierlich dosiert und mit einem Durchsatz von 5 kg/h wie im Beispiel 1 walzenkompaktiert.
Das resultierende Material wird anschließend ein zweites Mal mit einem Durchsatz von 7,9 kg/h sowie ein drittes Mal mit einem Durchsatz von 15,9 kg/h kompaktiert. Zwischen jedem Kompaktiervorgang wurde der Feinanteil (< 100 μm) bestimmt, aber nicht abgetrennt. Das erhaltene granulierte Material in Form von Flakes mit einer Dicke von etwa 50 bis 200 μm wird anschließend durch Sieben auf < 100 μm entstaubt, dabei werden 12 Gew.-% des beim Walzenkompaktieren erhaltenen Materials als Feinanteil abgetrennt.
Die abgetrennte Grobfraktion wird anschließend bei 1200 °C 2 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 μm. Zuletzt werden die resultierenden Flake-förmigen Agglomerate durch Siebung auf eine Größe kleiner 350 μm gebrochen und anschließend durch weitere Siebung fraktioniert.

Beispiel 14 I) A):

Es wird aus Beispiel 14 I) durch Sieben eine < 100 μm Fraktion hergestellt.

Beispiel 14 I) B):

Es wird aus Beispiel 14 I) durch Sieben eine 100 - 210 μm Fraktion hergestellt.

Beispiel 14 I) C):

Es wird aus Beispiel 14 I) durch Sieben eine 210 - 350 μm Fraktion hergestellt.

Für die Beispiele 14 I) A, B) und C) sind die an diesen Agglomeratfraktionen ermittelten Werte für den Texturindex und die spezifische Oberfläche nach der BET-Methode (Stickstoff-Adsorption, Beckmann-Coulter) in Tabelle 1 aufgeführt, außerdem ist in Tabelle 1 für Beispiel 14 I) C) das an REM-Aufnahmen ermittelte Aspektverhältnis aufgeführt.

Beispiel 14 II):

Beispiel 14 I) wurde wiederholt, jedoch wurde die nach dem dreimaligen Walzenkompaktieren abgetrennte Grobfraktion bei 1600 °C 2 Stunden in einer Stickstoff-Atmosphäre geglüht.

Beispiel 14 II) A):

Es wird aus Beispiel 14 II) durch Sieben eine < 100 μm Fraktion hergestellt.

Beispiel 14 II) B):

Es wird aus Beispiel 14 II) durch Sieben eine 100 - 210 μm Fraktion hergestellt.

Beispiel 14 II) C):

Es wird aus Beispiel 14 II) durch Sieben eine 210 - 350 μm Fraktion hergestellt.

Für die Beispiele 14 II) A, B) und C) sind die an diesen Agglomeratfraktionen ermittelten Werte für den Texturindex und die spezifische Oberfläche nach der BET-Methode (Stickstoff-Adsorption, Beckmann-Coulter) in Tabelle 1 aufgeführt, außerdem findet sich in Tabelle 1 für Beispiel 14 II) C) das an REM-Aufnahmen ermittelte Aspektverhältnis.

Beispiel 14 III):

Beispiel 14 I) wurde wiederholt, jedoch wurde die nach dem dreimaligen Walzenkompaktieren abgetrennte Grobfraktion bei 1950 °C 2 Stunden in einer Stickstoff-Atmosphäre geglüht.

Beispiel 14 III) A):

Es wird aus Beispiel 14 III) durch Sieben eine < 100 μm Fraktion hergestellt.

Beispiel 14 III) B):

Es wird aus Beispiel 14 III) durch Sieben eine 100 - 210 μm Fraktion hergestellt.

Beispiel 14 III) C):

Es wird aus Beispiel 14 III) durch Sieben eine 210 - 350 μm Fraktion hergestellt.

Für Beispiel 14 III) C) ist der an dieser Agglomeratfraktion ermittelte Wert für den Texturindex, die spezifische Oberfläche nach der BET-Methode (Stickstoff-Adsorption, Beckmann-Coulter) sowie das an REM-Aufnahmen ermittelte Aspektverhältnis in Tabelle 1 aufgeführt.

Beispiel 15:

Hexagonales Bornitrid-Pulver mit einer Primärpartikelgröße $d_{50}$ von 3 $\mu$m wird mittels Vibrorinne kontinuierlich dosiert und mit einem Durchsatz von 4 kg/h wie im Beispiel 1 walzenkompaktiert.

Das resultierende Material ist granuliertes Material in Form von Flakes mit einer Dicke von etwa 50 $\mu$m sowie ein Feinanteil von nicht kompaktiertem Ausgangsmaterial und wird anschließend durch Sieben auf < 100 $\mu$m entstaubt, dabei werden 46 Gew.-% des beim Walzenkompaktieren erhaltenen Materials als Feinanteil abgetrennt.

Die abgetrennte Grobfraktion wird anschließend bei 1900°C 12 Stunden in einer Stickstoff-Atmosphäre geglüht. Die geglühten Flake-förmigen Agglomerate werden mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 $\mu$m gebrochen und anschließend durch weitere Siebung auf > 210 $\mu$m und > 100 $\mu$m fraktioniert, um den Feinanteil < 100 $\mu$m von 5 Gew.-% abzutrennen.

An der Fraktion mit 210 -350 $\mu$m wurde die spezifische Oberfläche nach der BET-Methode (Stickstoff-Adsorption, Beckmann-Coulter) vermessen. Die texturierten Agglomerate weisen einen sehr niedrigen Wert von 0,99 m$^2$/g auf. Der an dieser Fraktion gemessene Texturindex beträgt 3,1.

Beispiel 16:

Hexagonales Bornitrid-Pulver mit einer Primärpartikelgröße $d_{50}$ von 3 $\mu$m wird mittels Vibrorinne kontinuierlich dosiert und mit einem Durchsatz von 4 kg/h wie imBeispiel 1 walzenkompaktiert.

Das resultierende Material wird anschließend ein zweites Mal mit einem Durchsatz von 5 kg/h sowie ein drittes Mal mit einem Durchsatz von 6,5 kg/h kompaktiert. Das resultierende Material ist granuliertes Material in Form von Flakes mit einer Dicke von etwa 50 bis 200 $\mu$m und wird anschließend durch Sieben auf < 100 $\mu$m entstaubt, dabei werden 15 Gew.-% des beim Walzenkompaktieren erhaltenen Materials als Feinanteil abgetrennt.

Die abgetrennte Grobfraktion wird anschließend mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 $\mu$m gebrochen und anschließend durch weitere Siebung auf eine Größe von 210 - 350 $\mu$m fraktioniert. Der an dieser Agglomeratfraktion ermittelte Texturindex ist in Tabelle 1 aufgeführt.

Beispiel 17:

Hexagonales Bornitrid-Pulver mit einer Primärpartikelgröße $d_{50}$ von 15 $\mu$m wird mittels Vibrorinne kontinuierlich dosiert und mit einem Durchsatz von 5 kg/h wie im Beispiel 1 walzenkompaktiert.

Das resultierende Material wird anschließend ein zweites Mal mit einem Durchsatz von 7,9 kg/h sowie ein drittes Mal mit einem Durchsatz von 15,9 kg/h kompaktiert. Das resultierende Material ist granuliertes Material in Form von Flakes mit einer Dicke von etwa 50 bis 200 $\mu$m und wird anschließend durch Sieben auf <100 $\mu$m entstaubt, dabei werden 15 Gew.-% des beim Walzenkompaktieren erhaltenen Materials als Feinanteil abgetrennt.

Die abgetrennte Grobfraktion wird anschließend mittels Sieb und Siebhilfe zunächst auf eine Größe von kleiner 3 mm gebrochen, anschließend auf kleiner 700 $\mu$m. Zuletzt werden die resultierenden Flake-förmigen Agglomerate durch Siebung auf eine Größe kleiner 350 $\mu$m gebrochen und anschließend durch weitere Siebung auf eine Größe von 210 - 350 $\mu$m fraktioniert. Der an dieser Agglomeratfraktion ermittelte Texturindex ist in Tabelle 1 aufgeführt.

Beispiel 18:

BN-Al$_2$O$_3$ Sprühgranulat mit einer mittleren Granulatgröße ($d_{50}$) von 100 $\mu$m und einem Al-Gehalt von 6 Gew.-% wird mittels Vibrorinne kontinuierlich dosiert und mit einem Durchsatz von 7 kg/h wie im Beispiel 1 walzenkompaktiert.

Das resultierende Material wird anschließend ein zweites Mal mit einem Durchsatz von 12,9 kg/h sowie ein drittes Mal mit einem Durchsatz von 19,9 kg/h kompaktiert. Das erhaltene granulierte Material in Form von Flakes mit einer Dicke von etwa 50 bis 200 $\mu$m wird anschließend durch Sieben auf < 100 $\mu$m entstaubt, dabei werden 22 Gew.-% des beim Walzenkompaktieren erhaltenen Materials als Feinanteil abgetrennt. Diese Flakes weisen mehrere Zentimeter Durchmesser auf. Sie werden anschließend an Luft bei 1000 °C eine Stunden lang geglüht und können als Füllstoff für Polymere eingesetzt werden.

Beispiel 19:

Hexagonales Bornitrid-Pulver mit einer Primärpartikelgröße $d_{50}$ von 3 $\mu$m wird mittels Vibrorinne kontinuierlich dosiert und mit einem Durchsatz von 4 kg/h in einem ersten Durchgang wie im Beispiel 1 walzenkompaktiert. In einem zweiten Durchgang (Durchsatz 5 kg/h) und einem dritten Durchgang (Durchsatz 6,5 kg/h) wurden Agglomerate in Flake-Form mit einer Dicke von etwa 50 bis 200 µm und mehreren Zentimetern Durchmesser erzeugt.

Aus den so erhaltenen Flakes wurden runde Scheibchen (3,5 cm$^2$) ausgestochen und an diesen ein Texturindex von 11,4 bestimmt.

Die sowohl geometrisch als auch mittels Auftriebsmessung ermittelte Dichte ist in Tabelle 2 aufgeführt.

Beispiel 20:

Hexagonales Bornitrid-Pulver mit einer Primärpartikelgröße d$_{50}$ von 3 µm wird mittels Vibrorinne kontinuierlich dosiert und mit einem Durchsatz von 4 kg/h in einem ersten Durchgang wie im Beispiel 1 walzenkompaktiert. In einem zweiten Durchgang (Durchsatz 5 kg/h) und einem dritten Durchgang (Durchsatz 6,5 kg/h) wurden Agglomerate in Flake-Form mit einer Dicke von etwa 50 bis 200 µm und mehreren Zentimetern Durchmesser erzeugt.

Die Agglomerate wurden bei 1950°C 2 Stunden lang unter Stickstoff geglüht.

Aus den so erhaltenen Flakes wurden runde Scheibchen (3,5 cm$^2$) ausgestochen und an diesen ein Texturindex von 7,5 bestimmt.

Die sowohl geometrisch als auch mittels Auftriebsmessung ermittelte Dichte ist in Tabelle 2 aufgeführt.

Beispiel 21:

Hexagonales Bornitrid-Pulver mit einer Primärpartikelgröße d$_{50}$ von 15 µm wird mittels Vibrorinne kontinuierlich dosiert und mit einem Durchsatz von 5 kg/h in einem ersten Durchgang wie im Beispiel 1 walzenkompaktiert. In einem zweiten Durchgang (Durchsatz 7,9 kg/h) und einem dritten Durchgang (Durchsatz 15,9 kg/h) wurden Agglomerate in Flake-Form mit einer Dicke von etwa 50 bis 200 µm und mehreren Zentimetern Durchmesser erzeugt.

Aus den so erhaltenen Flakes wurden runde Scheibchen (3,5 cm$^2$) ausgestochen und an diesen ein Texturindex von 14,4 bestimmt.

Die sowohl geometrisch als auch mittels Auftriebsmessung ermittelte Dichte ist in Tabelle 2 aufgeführt.

Beispiel 22:

Hexagonales Bornitrid-Pulver mit einer Primärpartikelgröße d$_{50}$ von 15 µm wird mittels Vibrorinne kontinuierlich dosiert und mit einem Durchsatz von 5 kg/h in einem ersten Durchgang wie im Beispiel 1 walzenkompaktiert. In einem zweiten Durchgang (Durchsatz 7,9 kg/h) und einem dritten Durchgang (Durchsatz 15,9 kg/h) wurden Agglomerate in Flake-Form mit einer Dicke von etwa 50 bis 200 µm und mehreren Zentimetern Durchmesser erzeugt.

Die Agglomerate wurden bei 1950°C 2 Stunden lang unter Stickstoff geglüht.

Aus den so erhaltenen Flakes wurden runde Scheibchen (3,5 cm$^2$) ausgestochen und an diesen ein Texturindex von 66,9 bestimmt.

Die sowohl geometrisch als auch mittels Auftriebsmessung ermittelte Dichte ist in Tabelle 2 aufgeführt.

Beispiel 23:

Beispiel 22 wurde wiederholt, jedoch wurden die Agglomerate nicht bei 1950 °C, sondern bei 2050 °C 2 Stunden lang unter Stickstoff geglüht.

Aus den so erhaltenen Flakes wurden runde Scheibchen (3,5 cm$^2$) ausgestochen und an diesen ein Texturindex von 108 bestimmt.

Die sowohl geometrisch als auch mittels Auftriebsmessung ermittelte Dichte ist in Tabelle 2 aufgeführt.

In den nachfolgenden Beispielen 24 bis 32 sowie den Vergleichsbeispielen wurden Bornitrid-Agglomerate zu gefüllten Epoxiden (Epoxid-Bornitrid-Verbundwerkstoffen) verarbeitet. Mit Hilfe dieser gefüllten Epoxid-Proben können Vergleichswerte für die Wärmeleitfähigkeit verschiedener Bornitrid-Agglomerate erhalten werden. Mit anderen Polymeren können auch höhere Wärmeleitfähigkeitswerte erreicht werden, beispielsweise beim Spritzgießen von Thermoplasten.

Beispiel 24 I) A):

Texturierte Agglomerate als Füllstoff in Epoxid, Füllgrad 43%, regellose Anordnung:

53 g texturierte Agglomerate in Flake-Form aus Beispiel 7) I) A) werden in 70 g eines Gemischs aus Epoxid und Härter (EpoFix, Struers, Willich, Deutschland) mit einem Blattrührer dispergiert. Bei 0,2 bar wird in einem Vakuumrührer Luft ausgetrieben. Das Gemisch wird in Schalen vergossen, in denen es erstarrt.

Für die Messung der Wärmeleitfähigkeit wird ein 10x10x2 mm$^3$ großes Plättchen aus der Mitte des Gussteils präpariert. Die Bestimmung der Wärmeleitfähigkeit WLF erfolgt durch Messung der Größen Temperaturleitfähigkeit a, spezifische Wärmekapazität $c_P$ und Dichte D und wird aus diesen Größen berechnet nach der Gleichung WLF = a * $c_P$ * D. Die Messung von a und $c_P$ wird mit dem Nanoflash LFA 447 (Netzsch, Selb, Deutschland) an Proben der Größe 10x10x2 mm$^3$ nahe Raumtemperatur durchgeführt. Die Dichte wird durch Wägung und Bestimmung der geometrischen Abmessungen der exakt geformten Proben ermittelt.

Der erhaltene Messwert für die Wärmeleitfähigkeit ist in Tabelle 3 aufgeführt.

Beispiele 24 I) B) und C), 24 II) A), B) und C), 24 III) A), B) und C), sowie Beispiel 25:

Texturierte Agglomerate als Füllstoff in Epoxid, Füllgrad 43%, regellose Anordnung:

Beispiel 24 I) A) wurde wiederholt, jedoch wurden 53 g texturierte Agglomerate in Flake-Form gemäß dem jeweils in Tabelle 3 angegebenen Beispiel (Spalte "Füllstoff") eingesetzt.

Beispiel 26:

Texturierte Agglomerate als Füllstoff in Epoxid, Füllgrad 43%, Anordnung mit Vorzugsorientierung, through plane

53 g texturierte Agglomerate in Flake-Form aus Beispiel 7) III) C) werden in 70 g eines Gemischs aus Epoxid und Härter (EpoFix, Struers, Willich, Deutschland) mit einem Blattrührer dispergiert. Bei 0,2 bar wird in einem Vakuumrührer Luft ausgetrieben. Das Gemisch wird zwischen zwei Plexiglasscheiben vergossen, die im Abstand von 2 mm zueinander fixiert sind. Das Gemisch erstarrt zwischen den Plexiglasscheiben. Aus der erstarrten Platte wird eine 10x10x2 mm$^3$ große Probe präpariert, wobei die Dicke der erstarrten Platte gleich der Höhe der Probe ist.

Die Wärmeleitfähigkeit wird wie in Beispiel 24 I) A) beschrieben gemessen (Tabelle 3). Aufgrund der Anordnung der texturierten Agglomerate mit Vorzugsorientierung ist der ermittelte Wärmeleitfähigkeitswert überwiegend "through plane" bezogen auf die Basalebenen der Bornitrid-Primärpartikel-Plättchen.

Beispiel 27:

Texturierte Agglomerate als Füllstoff in Epoxid, Füllgrad 43%, Anordnung mit Vorzugsorientierung, in plane

Aus der erstarrten Platte aus Beispiel 26 werden 5 Plättchen einer Größe von 10x10x2 mm$^3$ präpariert. Die Plättchen werden aufeinander geklebt, so dass ein Würfel mit 10 mm Kantenlänge entsteht. Nun wird der Würfel so gedreht, dass 5 Plättchen stirnseiten im Stapel nach oben zeigen. Der so ausgerichtete Stapel wird von oben und unten auf 2 mm Dicke heruntergeschliffen. Es entsteht wieder ein Plättchen einer Größe von 10x10x2 mm$^3$, das aus 5 aneinander geklebten Segmenten besteht.

Die Wärmeleitfähigkeit wird wie in Beispiel 24 I) A) beschrieben gemessen (Tabelle 3). Aufgrund der Anordnung der texturierten Agglomerate mit Vorzugsorientierung ist der ermittelte Wärmeleitfähigkeitswert überwiegend "in plane" bezogen auf die Basalebenen der Bornitrid-Primärpartikel-Plättchen.

Der ermittelte in-plane-Wert ist höher als der through-plane-Wert aus Beispiel 26.

Beispiel 28:

Texturierte Agglomerate als Füllstoff in Epoxid, Füllgrad 43%, Anordnung mit Vorzugsorientierung, through plane

Es wird ein Gemisch aus 3 % Boronid SCP1 (Bornitrid-Pulver einer mittleren Partikelgröße von 1 μm, ESK Ceramics GmbH & Co. KG), 24 % Boronid S15 (Bornitrid-Pulver einer mittleren Partikelgröße von 15 μm, ESK Ceramics) und 73 % Flakes aus Beispiel 7 III) C) hergestellt. 53 g des Gemischs werden entsprechend Beispiel 26 verarbeitet, zwischen zwei Plexiglasscheiben vergossen und eine erstarrte Platte hergestellt. Aus der erstarrten Platte wird wie in Beispiel 26 eine Wärmeleitfähigkeitsprobe hergestellt und die Wärmeleitfähigkeit gemessen (Tabelle 3).

Beispiel 29:

Texturierte Agglomerate als Füllstoff in Epoxid, Füllgrad 43%, Anordnung mit Vorzugsorientierung, in plane

Beispiel 28 wird wiederholt, jedoch werden aus der erstarrten Platte 5 Plättchen einer Größe von 10x10x2 mm$^3$ präpariert. Diese werden wie in Beispiel 27 zu einer in-plane-Wärmeleitfähigkeitsprobe weiterverarbeitet und die Wärmeleitfähigkeit in plane gemessen (Tabelle 3).

Der ermittelte in-plane-Wert ist höher als der through-plane-Wert aus Beispiel 28.

Beispiel 30:

53g Flakes aus Beispiel 7 III) C) werden im Taumelmischer 2 Stunden mechanisch behandelt. Die Flakes werden entsprechend Beispiel 24 I) A) verarbeitet, eine Wärmeleitfähigkeitsprobe erzeugt und die Wärmeleitfähigkeit gemessen (Tabelle 3).

Beispiel 31:

Texturierte Agglomerate (ungeglüht) als Füllstoff in Epoxid, Füllgrad 59%

105 g der Agglomeratfraktion 210 - 350 $\mu$m aus Beispiel 17 werden in 70 g eines Gemischs aus Epoxid und Härter (EpoFix, Struers, Willich, Deutschland) mit einem Blattrührer dispergiert. Bei 0,2 bar wird in einem Vakuumrührer Luft ausgetrieben. Das Gemisch wird in Schalen vergossen, in dem es erstarrt.
Für die Messung der Wärmeleitfähigkeit wird ein 10x10x2 mm$^3$ großes Plättchen aus der Mitte des Gussteils präpariert. Die Wärmeleitfähigkeit wird wie in Beispiel 24 I) A) beschrieben gemessen, der ermittelte Wärmeleitfähigkeitswert ist in Tabelle 3 aufgeführt.

Beispiel 32:

Texturierte Agglomerate (geglüht) als Füllstoff in Epoxid, Füllgrad 59%

Beispiel 31 wurde wiederholt, jedoch wurden anstelle der Agglomerate aus Beispiel 32 105 g der Agglomerate aus Beispiel 14 III) C) verarbeitet.
Der ermittelte Wärmeleitfähigkeitswert (siehe Tabelle 3) ist höher als der von Beispiel 31.

Beispiel 33:

Heißpressen mit texturierten Agglomeraten:

Hexagonales Bornitrid-Pulver mit einer Primärpartikelgröße $d_{50}$ von 15 $\mu$m (gemessen mittels Mastersizer 2000, Malvern, Naßmessung; Fa. ESK Ceramics GmbH & Co. KG, BORONID S15) wird mittels Vibrorinne kontinuierlich dosiert und mit einem Durchsatz von 5 kg/h wie im Beispiel 1 walzenkompaktiert. Das resultierende Material wird anschließend ein zweites Mal mit einem Durchsatz von 7,9 kg/h sowie ein drittes Mal mit einem Durchsatz von 15,9 kg/h kompaktiert. Das erhaltene granulierte Material in Form von Flakes mit einer Dicke von 200 $\mu$m wird anschließend durch Sieben auf < 100 $\mu$m entstaubt, dabei werden 12 Gew.-% des beim Walzenkompaktieren erhaltenen Materials als Feinanteil abgetrennt. Die erhaltenen Flakes liegen in einer Größe von 1 - 3 cm vor.
Die so hergestellten Flake-förmigen Agglomerate wurden in eine Heißpressmatrize (7,2 cm Durchmesser, 12 cm Höhe) geschichtet. Statt der üblichen < 250 g BN-Pulver konnten über 500 g Material in das gleiche Volumen der Heißpressform eingefüllt werden. Anschließend wurde bei einer Temperatur von 1800 °C, einem Druck von 23 MPa und mit einer Haltezeit von einer Stunde heißgepresst. Der erhaltene heißgepresste Bornitrid-Sinterkörper hat eine Dichte von 2,09 g/cm$^3$ und weist eine stark ausgeprägte Textur auf. Der am heißgepressten Sinterkörper an einer senkrecht zur Heißpressrichtung präparierten Probe mit den Abmessungen 2 mm x 1 cm x 1 cm ermittelte Texturindex beträgt 118,3. Zum Vergleich liegt der an bekannten heißgepressten Bornitrid-Sinterkörpern ermittelte Texturindex (beispielsweise MYCROSINT S, ESK Ceramics GmbH & Co. KG) bei Werten von bis etwa 1,8.

Beispiel 34:

Heißpressen mit texturierten Agglomeraten und turbostratischem Bornitrid:

Wie in Beispiel 33 wurden texturierte Agglomerate hergestellt, jedoch wurde für die Walzenkompaktierung hexagonales Bornitrid-Pulver mit einer Primärpartikelgröße $d_{50}$ von 3 $\mu$m eingesetzt. Die texturierten Agglomerate mit einer Größe von 1 - 3 cm wurden anschließend mit turbostratischem Bornitrid im Verhältnis 1:1 vermischt, in eine Heißpressmatrize (7,2 cm Durchmesser, 12 cm Höhe) eingefüllt und bei einer Temperatur von 1800 °C, einem Druck von 23 MPa und einer Haltezeit von 90 Minuten heißgepresst.
Der erhaltene heißgepresste Bornitrid-Sinterkörper hat eine Dichte von 2,14 g/cm$^3$. Die an diesem Sinterkörper ermittelte 4-Punkt-Biegebruchfestigkeit beträgt 153 MPa, die Brinellhärte 49,8. Zum Vergleich wurde aus Bornitrid-Pulver

mit einer Primärpartikelgröße $d_{50}$ von 3 $\mu$m unter den gleichen Heißpressbedingungen ein heißgepresster Sinterkörper vergleichbarer Größe hergestellt. Die an diesem Vergleichssinterkörper ermittelte Biegebruchfestigkeit beträgt 75 MPa bei einer Dichte von 2,03 g/cm$^3$ und einer Brinellhärte von 31,8.

Beispiel 35:

Heißpressen mit texturierten Agglomeraten:

Hexagonales Bornitrid-Pulver mit einer Primärpartikelgröße $d_{50}$ von 3 $\mu$m (gemessen mittels Mastersizer 2000, Malvern, Naßmessung) und einem $B_2O_3$-Gehalt von 3 Gew.-% wird mittels Vibrorinne kontinuierlich dosiert und mit einem Durchsatz von 4 kg/h wie im Beispiel 1 walzenkompaktiert. Das resultierende Material wird anschließend ein zweites Mal mit einem Durchsatz von 5,8 kg/h sowie ein drittes Mal mit einem Durchsatz von 7 kg/h kompaktiert. Das erhaltene granulierte Material in Form von Flakes mit einer Dicke von 200 $\mu$m wird anschließend durch Sieben auf < 100 $\mu$m entstaubt, dabei werden 4 Gew.-% des beim Walzenkompaktieren erhaltenen Materials als Feinanteil abgetrennt. Die erhaltenen Flakes liegen in einer Größe von 1 - 3 cm vor.

Die so hergestellten Flake-förmigen Agglomerate wurden in eine Heißpressmatrize (7,2 cm Durchmesser, 12 cm Höhe) geschichtet. Anschließend wurde bei einer Temperatur von 1800 °C, einem Druck von 23 MPa und mit einer Haltezeit von einer Stunde heißgepresst. Der erhaltene heißgepresste Bornitrid-Sinterkörper hat eine Dichte von 2,11 g/cm$^3$. Der am heißgepressten Sinterkörper an einer senkrecht zur Heißpressrichtung präparierten Probe mit den Abmessungen 2 mm x 1 cm x 1 cm ermittelte Texturindex beträgt 8,9.

Vergleichsbeispiel 1:

Nicht texturierte Agglomerate

Heißgepresstes Bornitrid (MYCROSINT S, ESK Ceramics GmbH & Co. KG) wird mittels eines Backenbrechers vorzerkleinert und anschließend in einer Hammerschlagmühle (mit 4 mm Lochsiebeinsatz) aufgebrochen. Durch Siebung erhält man Bruchfraktionen im gewünschten Bereich, mit 100 - 210 $\mu$m und 210 - 350 $\mu$m.

Der an der Agglomeratfraktion 100 - 210 $\mu$m ermittelte Wert für den Texturindex und die spezifische Oberfläche nach der BET-Methode (Stickstoff-Adsorption, Beckmann-Coulter) sind in Tabelle 1 aufgeführt.

Vergleichsbeispiel 1 I):

Nicht texturierte Agglomerate als Füllstoff in Epoxid, Füllgrad 43%, regellose Anordnung:

53g der Agglomerate aus Vergleichbeispiel 1 (Fraktion 100 - 210 $\mu$m, mit einer mittleren Agglomeratgröße $d_{50}$ von 170 $\mu$m) werden entsprechend Beispiel 24 I) A) verarbeitet, eine Wärmeleitfähigkeitsprobe erzeugt und die Wärmeleitfähigkeit gemessen (Tabelle 3).

Vergleichsbeispiel 1 II):

Nicht texturierte Agglomerate als Füllstoff in Epoxid, Füllgrad 43%, Probenherstellung "through plane"

53g der Agglomerate aus Vergleichbeispiel 1 (Fraktion 100 - 210 $\mu$m, mit einer mittleren Agglomeratgröße $d_{50}$ von 170 $\mu$m) werden entsprechend Beispiel 19 zu einer erstarrten Platte verarbeitet, eine Wärmeleitfähigkeitsprobe erzeugt und die Wärmeleitfähigkeit through-plane gemessen (Tabelle 3).

Vergleichsbeispiel 1 III):

Nicht texturierte Agglomerate als Füllstoff in Epoxid, Füllgrad 43%, Probenherstellung "in plane"

53g der Agglomerate aus Vergleichbeispiel 1 (Fraktion 100 - 210 $\mu$m, mit einer mittleren Agglomeratgröße $d_{50}$ von 170 $\mu$m) werden entsprechend Beispiel 19 verarbeitet.

Aus der erstarrten Platte aus Vergleichbeispiel 1 II) werden 5 Plättchen einer Größe von 10x10x2 mm$^3$ präpariert. Diese werden wie in Beispiel 20 zu einer in-plane- Wärmeleitfähigkeitsprobe weiterverarbeitet und die Wärmeleitfähigkeit in-plane gemessen (Tabelle 3).

Der ermittelte in-plane-Wert ist nur geringfügig höher als der through-plane-Wert aus Vergleichbeispiel 1 II).

Vergleichsbeispiel 2:

Nicht texturierte Agglomerate

Es werden Bornitrid-Agglomerate gemäß Beispiel 3 der WO 2005/021428 A1 hergestellt.

Dazu wird hexagonales Bornitrid-Pulver mit einer Primärpartikelgröße $d_{50}$ von 1 $\mu$m (gemessen mittels Mastersizer; Fa. ESK Ceramics GmbH & Co. KG, BORONID SCP1) kaltisostatisch bei 1350 bar verpresst. Die resultierenden Formkörper werden vorzerkleinert und mittels Sieben und Siebreiben in eine Fraktion von 100 - 210 $\mu$m aufgebrochen. Die Granulate werden unter Stickstoff bei 1900°C 12 Stunden lang geglüht.

Der resultierende Sinterkuchen der Granulate wird erneut per Sieb und Siebreibe in eine Fraktion von 100 - 210 $\mu$m aufgebrochen. Die mittels Laserbeugung (Trockenmessung, Mastersizer 2000, Malvern) gemessene mittlere Agglomeratgröße $d_{50}$ beträgt 150 $\mu$m.

Der an der Agglomeratfraktion 100 - 210 $\mu$m ermittelte Wert für den Texturindex und die spezifische Oberfläche nach der BET-Methode (Stickstoff-Adsorption, Beckmann-Coulter) sind in Tabelle 1 aufgeführt.

Vergleichsbeispiel 2 I):

Nicht texturierte Agglomerate als Füllstoff in Epoxid, Füllgrad 43%, regellose Anordnung:

53g der Agglomerate aus Vergleichsbeispiel 2 werden entsprechend Beispiel 17 I) A) verarbeitet, eine Wärmeleitfähigkeitsprobe erzeugt und die Wärmeleitfähigkeit gemessen (Tabelle 3).

Vergleichsbeispiel 2 II):

Nicht texturierte Agglomerate als Füllstoff in Epoxid, Füllgrad 43%, Probenherstellung "through plane"

53g der Agglomerate aus Vergleichsbeispiel 2 werden entsprechend Beispiel 26 zu einer erstarrten Platte verarbeitet, eine Wärmeleitfähigkeitsprobe erzeugt und die Wärmeleitfähigkeit through-plane gemessen (Tabelle 3).

Vergleichsbeispiel 2 III):

Nicht texturierte Agglomerate als Füllstoff in Epoxid, Füllgrad 43%, Probenherstellung "in plane"

Aus der erstarrten Platte aus Vergleichsbeispiel 2 II) werden 5 Plättchen einer Größe von 10x10x2 mm$^3$ präpariert. Diese werden wie in Beispiel 27 zu einer in-plane-Wärmeleitfähigkeitsprobe weiterverarbeitet und die Wärmeleitfähigkeit in-plane gemessen (Tabelle 3).

Der ermittelte in-plane-Wert ist nur geringfügig höher als der through-plane-Wert aus Vergleichsbeispiel 2 II).

Vergleichsbeispiel 3

53 g eines Pulver-Gemischs aus 10 % Boronid SCP1 (Bornitrid-Pulver einer mittleren Partikelgröße von 1 $\mu$m, ESK Ceramics GmbH & Co. KG) und 90 % Boronid S15 (Bornitrid-Pulver einer mittleren Partikelgröße von 15$\mu$m, ESK Ceramics GmbH & Co. KG) werden wie in Beispiel 24 I) A) beschrieben verarbeitet, eine Wärmeleitfähigkeitsprobe erzeugt und die Wärmeleitfähigkeit gemessen (Tabelle 3).

Tabelle 1:

| Beispiel | Texturindex | BET [m$^2$/g] | Aspektverhältnis |
|---|---|---|---|
| 7 I) A) | 1,6 | 16,65 | 1,8 |
| 7 I) B) | 2,3 | 18,43 | 3,3 |
| 7 I) C) | 2,9 | 18,63 | n.b. |
| 7 II) B) | 2,5 | 8,77 | 3,3 |
| 7 II) C) | 3,1 | 8,71 | 6,8 |
| 7 III) B) | 3,4 | 7,54 | 3,5 |
| 7 III) C) | 4,0 | 7,61 | 4,8 |

(fortgesetzt)

| Beispiel | Texturindex | BET [m$^2$/g] | Aspektverhältnis |
|---|---|---|---|
| 14 I) A) | 7,5 | 6,35 | n.b. |
| 14 I) B) | 16,4 | 7,19 | n.b. |
| 14 I) C) | 17,6 | 8,49 | 4,4 |
| 14 II) A) | 8,7 | 2,27 | n.b. |
| 14 II) B) | 22,1 | 2,26 | n.b. |
| 14 II) C) | 41,5 | 2,39 | 7,1 |
| 14 III) C) | 40,5 | 1,69 | 7,6 |
| 15 | 3,1 | 0,99 | n.b. |
| 16 | 6,1 | n.b. | n.b. |
| 17 | 7,7 | n.b. | n.b. |
| Vergleichsbeispiel 1 | 1,4 | 2,79 | n.b. |
| Vergleichsbeispiel 2 | 1,5 | 6,76 | n.b. |
| n.b.: nicht bestimmt | | | |

Tabelle 2:

| Beispiel | Auftriebs-Dichte [g/cm$^3$] | Dichte geometrisch [g/cm$^3$] |
|---|---|---|
| 19 | 2,24 | 2,11 |
| 20 | 2,18 | 2,04 |
| 21 | 2,15 | 2,00 |
| 22 | 2,05 | 1,92 |
| 23 | 2,14 | 2,05 |

Tabelle 3:

| Beispiel | Füllstoff | Wärmeleitfähigkeit [W/m*K] |
|---|---|---|
| 24 I) A) | 7 I) A) | 1,06 |
| 24 I) B) | 7 I) B) | 1,35 |
| 24 I) C) | 7 I) C) | 1,03 |
| 24 II) A) | 7 II) A) | 1,35 |
| 24 II) B) | 7 II) B) | 1,20 |
| 24 II) C) | 7 II) C) | 1,67 |
| 24 III) A) | 7 III) A) | 3,15 |
| 24 III) B) | 7 III) B) | 2,13 |
| 24 III) C) | 7 III) C) | 2,26 |
| 25 | 14 III) C) | 1,90 |
| 26 | 7 III) C) | 1,74 |
| 27 | 7 III) C) | 2,59 |

(fortgesetzt)

| Beispiel | Füllstoff | Wärmeleitfähigkeit [W/m*K] |
|---|---|---|
| 28 | 3% SCP1, 24% Boronid S15, 73% Agglomerate aus Beispiel 7 III) C) | 2,33 |
| 29 | 3% SCP1, 24% Boronid S15, 73% Agglomerate aus Beispiel 7 III) C) | 3,19 |
| 30 | 7 III) C) verrundet | 2,32 |
| 31 | 17 | 1,80 |
| 32 | 14 III) C) | 2,40 |
| Vergleichsbeispiel 1 I) | Vergleichsbeispiel 1 | 1,26 |
| Vergleichsbeispiel 1 II) | Vergleichsbeispiel 1 | 1,15 |
| Vergleichsbeispiel 1 III) | Vergleichsbeispiel 1 | 1,24 |
| Vergleichsbeispiel 2 I) | Vergleichsbeispiel 2 | 2,26 |
| Vergleichsbeispiel 2 II) | Vergleichsbeispiel 2 | 2,02 |
| Vergleichsbeispiel 2 III) | Vergleichsbeispiel 2 | 2,17 |
| Vergleichsbeispiel 3 | 10% SCP1, 90% Boronid S15 | 1,15 |

**Patentansprüche**

1. Bornitrid-Agglomerate, umfassend plättchenförmige, hexagonale Bornitrid-Primärpartikel mit einer mittleren Partikelgröße $d_{50}$ von 0,5 - 15 μm, die miteinander mit einer Vorzugsorientierung in der Weise agglomeriert sind, dass die Plättchenebenen der Bornitrid-Primärpartikel im wesentlichen parallel zueinander ausgerichtet sind, sodass die Agglomerate anisotrope Eigenschaften aufweisen, wobei die Agglomerate schuppenförmig ausgebildet sind, und wobei der Anteil an durch das Formgebungsverfahren unmittelbar erzeugter Formgebungsfläche, bezogen auf die Gesamtoberfläche der schuppenförmigen Agglomerate, wenigstens 10 %, bevorzugt wenigstens 20 %, beträgt, wobei der Anteil der Formgebungsfläche an der Gesamtoberfläche wie folgt ermittelt wird:

$$\text{Anteil Formgebungsfläche [\%]} = 2 \times \text{Stirnfläche} / \text{Gesamtoberfläche} \times 100$$

wobei

Stirnfläche = Agglomeratdurchmesser x Agglomeratdurchmesser
Gesamtoberfläche = 2 x Stirnfläche + 4 x Seitenfläche
Seitenfläche = Agglomeratdicke x Agglomeratdurchmesser

2. Bornitrid-Agglomerate gemäß Anspruch 1, wobei der an Agglomeratschüttungen der schuppenförmigen Agglomerate gemessene Texturindex mehr als 1,5, vorzugsweise wenigstens 2,0, weiter vorzugsweise wenigstens 2,8, besonders bevorzugt wenigstens 3,5 beträgt, wobei die Bestimmung des Texturindex röntgenographisch erfolgt und gemäß der folgenden Formel ermittelt wird:

$$TI = \frac{I_{(002),\,Probe} / I_{(100),\,Probe}}{7,29}$$

wobei

TI = Texturindex

$I_{(002), Probe}$ = Intensität des (002)-Reflexes im Röntgenbeugungsdiagramm
$I_{(100), Probe}$ = Intensität des (100)-Reflexes im Röntgenbeugungsdiagramm

3. Bornitrid-Agglomerate gemäß Anspruch 1, wobei der an Agglomeratschüttungen der schuppenförmigen Agglomerate gemessene Texturindex 0,7 oder weniger, vorzugsweise 0,5 oder weniger, weiter vorzugsweise 0,35 oder weniger, besonders bevorzugt 0,3 oder weniger beträgt, wobei die Bestimmung des Texturindex wie in Anspruch 2 angegeben erfolgt.

4. Bornitrid-Agglomerate gemäß mindestens einem der Ansprüche 1 bis 3, wobei die Dichte der schuppenförmigen Agglomerate wenigstens 1,6 g/cm$^3$, vorzugsweise wenigstens 1,8 g/cm$^3$, insbesondere bevorzugt wenigstens 2,0 g/cm$^3$, beträgt.

5. Bornitrid-Agglomerate gemäß mindestens einem der Ansprüche 1 bis 4, wobei die Dicke der schuppenförmigen Agglomerate 10 bis 500 $\mu$m, vorzugsweise von 15 bis 350 $\mu$m, besonders bevorzugt 30 bis 200 $\mu$m, beträgt.

6. Bornitrid-Agglomerate gemäß mindestens einem der Ansprüche 1 bis 5, wobei die mittlere Agglomeratgrösse $d_{50}$ bis zu 500 $\mu$m, vorzugsweise bis zu 200 $\mu$m beträgt.

7. Bornitrid-Agglomerate gemäß mindestens einem der Ansprüche 1 bis 6, wobei die Agglomerate zusätzlich zu den Bornitrid-Primärpartikeln Polymere und/oder weitere Partikel umfassen, die vorzugsweise ausgewählt sind aus der Gruppe, umfassend Carbide, Boride, Nitride, Oxide, Hydroxide, Kohlenstoff und Metalle.

8. Bornitrid-Agglomerate gemäß mindestens einem der Ansprüche 1 bis 7, wobei die Agglomerate mittels Additiven oberflächenmodifiziert sind, und wobei die Additive vorzugsweise ausgewählt sind aus der Gruppe umfassend Polymere, metallorganische Verbindungen, Silane, Öle, Carbonsäuren, Copolymere, hydrolysierte Monomere, teilhydrolysierte Monomere, teilweise kondensierte Monomere und Nanopartikel.

9. Verfahren zur Herstellung von Bornitrid-Agglomeraten gemäß mindestens einem der Ansprüche 1 bis 8, wobei plättchenförmige, hexagonale Bornitrid-Primärpartikel in der Weise agglomeriert werden, dass sie sich zueinander mit einer Vorzugsorientierung ausrichten, wobei die Agglomerierung der Bornitrid-Primärpartikel durch die Kompaktierung eines plättchenförmiges, hexagonales Bornitrid umfassenden Ausgangsmaterials zwischen zwei sich drehenden gegenläufigen Walzen erfolgt.

10. Verfahren zur Herstellung von Bornitrid-Agglomeraten gemäß Anspruch 9, wobei die Walzen mit definiertem Anpressdruck gegeneinander gedrückt werden.

11. Verfahren zur Herstellung von Bornitrid-Agglomeraten gemäß mindestens einem der Ansprüche 9 und 10, wobei der Kompaktierungsschritt mehrfach durchgeführt wird.

12. Verfahren zur Herstellung von BornitridAgglomeraten gemäß mindestens einem der Ansprüche 9 bis 11, wobei nach der Kompaktierung als weiterer Schritt eine Temperaturbehandlung durchgeführt wird, vorzugsweise bei einer Temperatur von bis zu 2300 °C, weiter vorzugsweise bei 1200 bis 2050 °C, noch weiter vorzugsweise bei 1400 bis 2000 °C und insbesondere bevorzugt bei 1600 bis 1950 °C.

13. Verfahren zur Herstellung von Bornitrid-Agglomeraten gemäß mindestens einem der Ansprüche 9 bis 12, wobei anschließend an den Agglomerierungsschritt eine definierte Agglomeratgrößenfraktion durch Klassieren eingestellt wird, wobei die Klassierung durch im Stand der Technik bekannte Verfahren, vorzugsweise über Sieben und Sichten, erfolgt.

14. Polymer-Bornitrid-Verbundwerkstoff umfassend schuppenförmige Bornitrid-Agglomerate gemäß mindestens einem der Ansprüche 1 bis 8.

15. Bornitrid-Sinterkörper, umfassend hexagonales Bornitrid, erhältlich durch Sintern von schuppenförmigen Bornitrid-Agglomeraten gemäß mindestens einem der Ansprüche 1 bis 8, wobei der Texturindex des hexagonalen Bornitrids im Sinterkörper, gemessen an einer senkrecht zur Heißpressrichtung präparierten Probe, wenigstens 2, vorzugsweise wenigstens 3, weiter vorzugsweise wenigstens 5, weiter vorzugsweise wenigstens 10 und besonders bevorzugt wenigstens 20 beträgt, und wobei die Bestimmung des Texturindex wie in Anspruch 2 angegeben erfolgt.

**Claims**

1. Boron nitride agglomerates, comprising platelet-shaped hexagonal boron nitride primary particles having an average particle size $d_{50}$ of 0.5-15 $\mu$m, which are agglomerated with one another with a preferred orientation in a manner such that the platelet planes of the boron nitride primary particles are aligned essentially parallel to one another, such that the agglomerates have anisotropic properties, wherein the agglomerates are formed in the shape of flakes, and wherein the portion of the shaped surface created directly by the shaping method is at least 10%, or preferably at least 20%, relative to the total surface of the flake-shaped agglomerates, wherein the portion of the shaped surface on the total surface is determined as follows:

$$\text{Portion of shaped surface [\%]} = 2 \times \text{front surface/total surface} \times 100,$$

wherein

   front surface = agglomerate diameter x agglomerate diameter
   total surface = 2 x front surface + 4 x side surface
   side surface = agglomerate thickness x agglomerate diameter

2. Boron nitride agglomerates according to claim 1, wherein the texture index measured on bulk flake-shaped agglomerates is more than 1.5, or preferably at least 2.0, or more preferably at least 2.8, or especially preferably at least 3.5, wherein the texture index is determined with x-ray radiography and in accordance with the following formula:

$$TI = \frac{I_{(002),\ \text{sample}} / I_{(100),\ \text{sample}}}{7.29}$$

wherein

   TI = Texture index
   $I_{(002),\ \text{sample}}$ = intensity of the (002) reflex in the x-ray diffraction diagram
   $I_{(100),\ \text{sample}}$ = intensity of the (100) reflex in the x-ray diffraction diagram

3. Boron nitride agglomerates according to claim 1, wherein the texture index measured on bulk flake-shaped agglomerates is 0.7 or less, or preferably 0.5 or less, or more preferably 0.35 or less, or especially preferably 0.3 or less, wherein the texture index is determined as indicated in claim 2.

4. Boron nitride agglomerates according to at least one of claims 1 through 3, wherein the density of the flake-shaped agglomerates is at least 1,600 kg/m$^3$ (1.6 g/cm$^3$), or preferably at least 1,800 kg/m$^3$ (1.8 g/cm$^3$), or particularly preferably at least 2,000 kg/m$^3$ (2.0 g/cm$^3$).

5. Boron nitride agglomerates according to at least one of claims 1 through 4, wherein the thickness of the flake-shaped agglomerates is from 10 to 500 $\mu$m, or preferably from 15 to 350 $\mu$m, or especially preferably from 30 to 200 $\mu$m.

6. Boron nitride agglomerates according to a least one of claims 1 through 5, wherein the average agglomerate size $d_{50}$ is up to 500 $\mu$m, or preferably up to 200 $\mu$m.

7. Boron nitride agglomerates according to at least one of claims 1 through 6, wherein the agglomerates, in addition to the boron nitride primary particles, comprise polymers and/or further particles, which are preferably selected from the group comprising carbides, borides, nitrides, oxides, hydroxides, carbon, and metals.

8. Boron nitride agglomerates according to at least one of claims 1 through 7, wherein the surfaces of the agglomerates are modified by means of additives, and wherein the additives are preferably selected from the group comprising polymers, organometallic compounds, silanes, oils, carboxylic acids, copolymers, hydrolyzed monomers, partially hydrolyzed monomers, partially condensed monomers, and nanoparticles.

**9.** Method for producing boron nitride agglomerates according to at least one of claims 1 through 8, wherein platelet-shaped, hexagonal boron nitride primary particles are agglomerated in a manner such that they are aligned to one another in a preferred orientation, wherein the boron nitride primary particles are agglomerated by means of compacting a platelet-shaped, hexagonal starting material comprising boron nitride between two rollers rotating in opposite directions.

**10.** Method for producing boron nitride agglomerates according to claim 9, wherein the rollers are pressed against one another with a defined contact pressure.

**11.** Method for producing boron nitride agglomerates according to at least one of claims 9 and 10, wherein the compaction step is carried out multiple times.

**12.** Method for producing boron nitride agglomerates according to at least one of claims 9 through 11, wherein, after the compaction, a temperature treatment is carried out as an additional step - preferably, at a temperature of up to 2,300 °C, or more preferably at 1,200 to 2,050 °C, or even more preferably at 1,400 to 2,000 °C, and particularly preferably at 1,600 to 1,950 °C.

**13.** Method for producing boron nitride agglomerates according to at least one of claims 9 through 12, wherein, subsequent to the agglomeration step, a defined agglomerate size fraction is adjusted through classification, wherein the classification takes place by means of a method known in the prior art - preferably, by means of sieving and sifting.

**14.** Polymer boron nitride composite comprising flake-shaped boron nitride agglomerates according to at least one of claims 1 through 8.

**15.** Boron nitride sintered bodies, comprising hexagonal boron nitride, which can be obtained through the sintering of flake-shaped boron nitride agglomerates according to at least one of claims 1 through 8, wherein the texture index of the hexagonal boron nitride in the sintered body, as measured on a sample prepared vertically with respect to the hot-press direction, is at least 2, or preferably at least 3, or more preferably at least 5, or even more preferably at least 10, and especially preferably at least 20, and wherein the determination of the texture index takes place as stated in claim 2.

**Revendications**

**1.** Agglomérats de nitrure de bore comprenant des particules primaires de nitrure de bore hexagonales en forme de plaquettes ayant une taille moyenne de particule $d_{50}$ de 0,5 à 15 $\mu$m agglomérées avec une orientation préférentielle les unes par rapport aux autres de telle sorte que les plans plaquettaires des particules primaires de nitrure de bore soient orientés sensiblement parallèlement les uns par rapport aux autres pour que les agglomérats aient des propriétés anisotropes, les agglomérats étant en forme d'écailles et dans lesquels le pourcentage de surface de formage directement généré par le procédé de formage, par rapport à la surface totale des agglomérats en forme d'écailles, est d'au moins 10 %, de préférence d'au moins 20 %, le pourcentage de la surface de formage par rapport à la surface totale étant déterminé comme suit :

$$\text{Pourcentage de la surface de formage [\%]} = 2 \times \text{surface de contact/ surface totale} \times 100$$

où

Surface de contact = diamètre d'agglomérat x diamètre d'agglomérat
Surface totale = 2 x surface de contact + 4 x surface latérale
Surface latérale = épaisseur d'agglomérat x diamètre d'agglomérat

**2.** Agglomérats de nitrure de bore selon la revendication 1, l'indice de texture mesuré sur des remplissages d'agglomérats en forme d'écailles étant supérieur à 1,5, de préférence au moins 2,0, mieux encore d'au moins 2,8, encore plus préférablement d'au moins 3,5, l'indice de texture étant déterminé par des rayons X et selon la formule suivante :

$$TI = \frac{I_{(002),\ Probe\ «\ (échantillon)\ »}\ /\ I_{(100),\ Probe\ «\ (échantillon)\ »}}{7,29}$$

où

TI = Indice de texture

$I_{(002),\ Probe\ «\ (échantillon)\ »}$ = intensité du reflet (002) dans le diagramme de diffraction des rayons X

$I_{(100),\ Probe\ «\ (échantillon)\ »}$ = intensité du reflet (100) dans le diagramme de diffraction des rayons

3. Agglomérats de nitrure de bore selon la revendication 1, l'indice de texture mesuré sur les remplissages d'agglomérats en forme d'écailles étant de 0,7 ou moins, de préférence de 0,5 ou moins, mieux encore de 0,35 ou moins, encore plus préférablement de 0,3 ou moins, l'indice de texture étant déterminé comme indiqué dans la revendication 2.

4. Agglomérats de nitrure de bore selon au moins l'une des revendications 1 à 3, la densité des agglomérats en forme d'écailles étant d'au moins 1 600 kg/m³ (1,6 g/cm³), de préférence d'au moins 1 800 kg/m³ (1,8 g/cm³), encore plus préférablement d'au moins 2 000 kg/m³ (2,0 g/cm³).

5. Agglomérats de nitrure de bore selon au moins l'une des revendications 1 à 4, l'épaisseur des agglomérats en forme d'écailles étant de 10 à 500 $\mu$m, de préférence de 15 à 350 $\mu$m, encore plus préférablement de 30 à 200 $\mu$m.

6. Agglomérats de nitrure de bore selon au moins l'une des revendications 1 à 5, la taille moyenne de l'agglomérat $d_{50}$ étant de jusqu'à 500 $\mu$m, de préférence jusqu'à 200 $\mu$m.

7. Agglomérats de nitrure de bore selon au moins l'une des revendications 1 à 6, les agglomérats comprenant, outre les particules primaires de nitrure de bore, des polymères et/ou d'autres particules choisies de préférence dans le groupe comprenant les carbures, les borures, les nitrures, les oxydes, les hydroxydes, le carbone et les métaux.

8. Agglomérats de nitrure de bore selon au moins l'une des revendications 1 à 7, les agglomérats étant modifiés en surface au moyen d'additifs et les additifs étant de préférence choisis dans le groupe comprenant les polymères, les composés organométalliques, les silanes, les huiles, les acides carboxyliques, les copolymères, les monomères hydrolysés, les monomères partiellement hydrolysés, les monomères partiellement condensés et les nanoparticules.

9. Procédé destiné à la fabrication d'agglomérats de nitrure de bore selon au moins l'une des revendications 1 à 8, les particules primaires de nitrure de bore hexagonales en forme de plaquettes étant agglomérées de telle sorte qu'elles s'orientent de manière préférentielle l'une par rapport à l'autre, l'agglomération des particules primaires de nitrure de bore se faisant entre deux rouleaux rotatifs tournants en sens inverse par compactage d'un matériau de départ comprenant un nitrure de bore hexagonal en forme de plaquettes.

10. Procédé destiné à la fabrication d'agglomérats de nitrure de bore selon la revendication 9, les rouleaux étant pressés l'un contre l'autre avec une pression de contact définie.

11. Procédé destiné à la fabrication d'agglomérats de nitrure de bore selon au moins l'une des revendications 9 et 10, l'étape de compactage étant effectuée plusieurs fois.

12. Procédé destiné à la fabrication d'agglomérats de nitrure de bore selon au moins l'une des revendications 9 à 11, un traitement thermique étant effectué comme étape supplémentaire après le compactage, de préférence à une température allant jusqu'à 2300 °C, mieux encore de 1200 à 2050 °C, plus préférablement de 1400 à 2000 °C et encore plus préférablement de 1600 à 1950 °C.

13. Procédé destiné à la fabrication d'agglomérats de nitrure de bore selon au moins l'une des revendications 9 à 12, une fraction de taille d'agglomérat définie étant ensuite ajustée par classification à la suite de l'étape d'agglomération au moyen de procédés connus en l'état de la technique, de préférence par tamisage et criblage.

14. Matériau composite à base de nitrure de bore et polymère comprenant des agglomérats de nitrure de bore en forme d'écailles selon au moins l'une des revendications 1 à 8.

15. Corps fritté en nitrure de bore comprenant du nitrure de bore hexagonal pouvant être obtenu par frittage d'agglomérats de nitrure de bore en forme d'écailles selon au moins l'une des revendications 1 à 8, l'indice de texture du nitrure de bore hexagonal dans le corps fritté, mesuré sur un échantillon préparé perpendiculairement à la direction de pressage à chaud, étant d'au moins 2, de préférence d'au moins 3, mieux encore d'au moins 5, mieux encore d'au moins 10 et encore plus préférablement d'au moins 20 et l'indice de texture étant déterminé comme indiqué dans la revendication 2.

Figur 1a

100 μm

Figur 1b

Figur 2

Figur 3

Figur 4

Figur 5

Figur 6

**EP 2 637 985 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20060127422 A1
- WO 03013845 A1
- US 6048511 A
- EP 0939066 A1
- US 20020006373 A1
- US 20040208812 A1
- WO 2005021428 A1
- US 5854155 A
- US 6096671 A
- US 20030153665 A1
- WO 2008085999 A1
- US 5898009 A
- WO 2010137440 A1
- EP 2436662 A1

### In der Beschreibung aufgeführte Nicht-Patentliteratur

- **R. F. HILL.** Emerging packaging Technologies. *SMTA National Symposium,* 18. November 1996
- **MORGAN, C.S. ; MCCULLOCH, R.W.** Ceramic processing of boron nitride insulators. *14. Conference on ceramic science: processing of crystalline ceramics,* 07. November 1977
- Energy Citations Database (ECD). U.S. Department of Energy (DOE), 01. Januar 1977
- **HSIA YEN NG et al.** Thermal conductivity of boron nitride-filled thermplastics: Effect of filler characteristics and composite processing conditions. *POLYMER COM-POSITES,* 01. Dezember 2005, vol. 26, 778-790